(19) Europäisches Patentamt / European Patent Office / Office européen des brevets

(11) **EP 3 537 697 A1**

(12) **EUROPEAN PATENT APPLICATION**

(43) Date of publication:
**11.09.2019 Bulletin 2019/37**

(21) Application number: **18160346.5**

(22) Date of filing: **06.03.2018**

(51) Int Cl.:
*H04N 1/00* (2006.01)     *H04N 1/56* (2006.01)
*G09G 5/02* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Koninklijke Philips N.V.
5656 AE Eindhoven (NL)**

(72) Inventor: **van der Vleuten, Renatus Josephus
5656 AE Eindhoven (NL)**

(74) Representative: **de Haan, Poul Erik et al
Philips International B.V.
Philips Intellectual Property & Standards
High Tech Campus 5
5656 AE Eindhoven (NL)**

(54) **VERSATILE DYNAMIC RANGE CONVERSION PROCESSING**

(57) To be able to correctly color process YCbCr colors wherein the luma Y has a double functional definition which changes above a certain luma value from one functional shape to another (like HLG) the inventor invented a image color transformer (208) comprising a luminance mapping unit (302) and a chrominance mapping unit (320), arranged to get as input an YCbCr-defined pixel color of an input image (Im_RLDR) in which the luma component (Y) is defined by an opto-electrical transfer function which allocates lumas for a lower part of a range of pixel luminances (DR_h) according to a square root function, and lumas for an upper part of the pixel luminances according to a logarithmic function, and arranged to calculate an output color (RH,GH,BH) of an output image (Im3000n) having a dynamic range which is different from the dynamic range of the input image, wherein the image color transformer is arranged to receive a luminance mapping function (F_L[P]) to be applied to the pixel luma yielding a resultant luminance (Lmda), and a chrominance mapping function (F_C[Y]) to be applied to the pixel chrominances yielding output chrominances (Cb*, Cr*),
- characterized in that the color transformer comprises a scale factor determiner (400) arranged to determine a scale factor (LAM) which is calculated so that for any received luminance mapping function shape the value of the resultant luminance (Lmda) which is obtained by luminance mapping an input pixel luma having a value equal to 0.5, is after multiplying said value of the resultant luminance by the scale factor identical to the luminance which results from applying the inverse of the opto-electrical transfer function to an input pixel luma having a value equal to 0.5;
- and which color transformer is arranged to determine an adjusted luminance (Ladj) by multiplying the resultant luminance (Lmda), which is obtained by luminance mapping any input pixel luma, by the scale factor (LAM), and arranged to use the adjusted luminance and the output chrominances to determine the output color (RH,GH,BH).

Fig. 5

EP 3 537 697 A1

## Description

FIELD OF THE INVENTION

The invention relates to methods and apparatuses for converting at least the luminances of image pixels (in particular for videos of temporally successive images) from their initial values to luminance values of an output image, corresponding to a different dynamic range situation, such as in particular the optimization of the output image for a display of particular display peak brightness PB_D (display adaptation). In particular, such a technology can be embodied in a HDR video decoder or decoding method.

BACKGROUND OF THE INVENTION

Until a couple of years ago, all videos (e.g. television programs or movies on blu-ray disks, or other uses of video such as e.g. videophony) and most still images were encoded according to the so-called low dynamic range (LDR) philosophy, also called standard dynamic range (SDR). This meant there was a single manner to create images, with the Rec. 709 OETF defining the 8 or 10 bit luma codes for transmission, and the coding peak brightness PB_C of the video always being 100 nit, and the darkest codeable luminance being 0.1 nit. All actual displays at end consumer's premises, as well as the preview monitors at the site of content creation had corresponding whitest white (PB_D=100 nit) and darkest black, so that made video production and handling further down the technical chain relatively simple, as the producer would see on his identical monitor what the end customer would see.

Recently the past few years, new displays with considerably different PB_D have emerged, e.g. a 2000 nit PB_D display is no less than 20 times brighter than the SDR display, and that could mean that images would look annoyingly bright (when e.g. mapping a SDR image straight onto a HDR display under the constraint of relative luminance displaying with coded white mapped to display PB_D), or vice versa a HDR image (supposedly made for a HDR TV) could look far too dark when directly rendered on a HDR TV.

Things complicated by the introduction of a number of HDR image coding and handling visions, which could lead to the fact that the HDR image when rendered on a SDR display was not necessarily unwatchably dark, but still of the wrong colors anyway (e.g. losing contrast, which could go as far as that a man in bright mist becomes totally invisible).

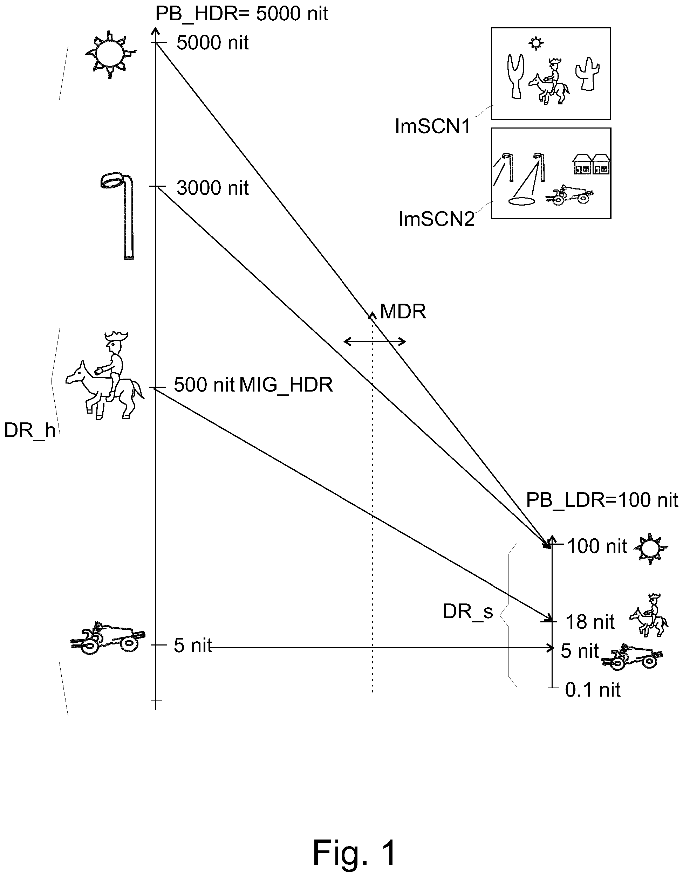

For convenience the reader is introduced to some of the core aspects of HDR coding and dynamic range adaptation with the aid of Fig. 1, which shows a couple of archetypical illustrative examples of the many possible HDR scenes a HDR system of the future (e.g. connected to a 1000 nit PB_D display) may need to be able to correctly handle, i.e. by rendering the appropriate luminances for all objects/pixels in the image.

E.g. ImSCN1 is a sunny outdoors image from a western movie (which has mostly bright areas (the landcape), which should ideally be rendered somewhat brighter than on a 100 nit display, to offer more a sunny look than a rainy day look), whereas ImSCN2 is a nighttime image (with mostly dark pixels, although within the same image also very bright pixels, e.g. the streetlight lamp pixels).

What makes such an image sunny, versus the other one dark? Not necessarily the relative luminances, at least not in the SDR paradigm. What makes HDR image rendering different from how it always was in the SDR era which ended only a couple of years ago, is that the SDR had such a limited dynamic range (about PB=100 nit, and black level approximately 0.1 to 1 nit), that mostly only the intrisnsic reflectivities of the objects could be shown in SDR (which would fall between 90% for good white and 1% for good black). That would be good for recognizing objects (having a certain amount of brightness from their reflection, and of course their chromaticity), under uniform technically controlled illumination, but not so much the beautiful variations in illumination itself one can have in natural scenes, and what impact that can have on viewers. One could make the nighttime image somewhat darker, in the luma histogram, but not too much or it would just render as too dark and ugly an image, and on a 100 nit TV or in a 100 nit encoding there just isn't any room available for anything overly bright. So one had to show the objects independent of their illumination, and couldn't at the same time faithfully show all the sometimes highly contrasty illuminations of the scene that could happen. In practice that meant that the highly bright sunny scene had to be rendered with approximately the same display luminances (0-100 nit) as a dull rainy day scene. And even the night time scenes could not be rendered too dark, or the viewer would not be able to well-discriminate the darkest parts of the image, so again those night time brightnesses would be rendered spanning the range between 0 and 100 nit. A conventional solution to that was to color the night scenes blue, so that the viewer would understand he was not looking at a daytime scene. Now of course in real life human vision would also adapt to the available amount of light, but not that much (most people in real life do recognize that it's getting dark, or that they are in a darker, or quite bright environment).

On the left we see the luminance axis for a 5000 nit PB_C master HDR image coding (and corresponding dynamic range DR_h, which can be defined as the brightest luminance divided by the darkest, although the reader should realize that good dynamic range imaging is not just about those two endpoints, but also about the optimal determination for each HDR scene type of all in-between pixel luminances for the various HDR scene objects). Since the grader now has the possibility to define a 5000 nit sun, he can at least define images in which the sun could look spectacularly more glowing than in an SDR coding, in which the sun kind of looks like a circular white paper cut-out (provided of course that the viewer has a 5000 nit PB_D display to watch such defined images accurately).

So one would like to render the images with all the spectacular local and also temporal lighting effects that one can artistically design in it, to get much more realistic rendered images at least if one has a HDR display available. What exactly would be an appropriate luminance for say a light saber in a dark room we will leave to the color grader creating the master grading(s) to decide, and this application will focus on the needed technical possibilities to create and handle such images. Note that when we teach for elucidation that the object luminances on the HDR luminance axis (or their mapping to smaller dynamic range luminance axes corresponding with at least a lower PB_C) are optimally created by a human color grader, we do not want to exclude automatic determination, e.g. with an inverse tone mapping applied by a creation-side dynamic range convertor which creates a HDR master image on the basis of a pre-existing SDR image.

For the night scene one wants mostly dark luminances, but the main character on the motorcycle should be well-recognizable i.e. not too dark on all consumer-side TVs (e.g. around 5 nit), and at the same time there can be pixels of quite high luminance, e.g. of the street lights, e.g. around 3000 nit on a 5000 nit display, or around the peak brightness on several other HDR displays (e.g. 1000 nit).

Such a HDR image only encoding, was what the first generation HDR video codec achieved, the HDR10 codec. It uses a more steep Opto-electrical transfer function for allocating 10 bit luma codes to the various luminances 0.0001-5000 nits than the REC. 709 OETF, so that such a larger range of luminances becomes representable in the image to be communicated. However, such a HDR10 codec leaves it totally open what one needs to do at the video consumption side, in case one has a display with PB_D lower than 5000 nit, e.g. the ubiquitously present legacy 100 nit SDR TV.

So secondly, one may oftentimes need to have a SDR re-graded (or downgraded) image for the HDR image, which simplistically one could summarize as follows: whereas on HDR displays which have sufficient capability one may spread the object luminances all far apart along the large luminance range (e.g. the luminance of the sun pixels being much higher than of the desert or cowboy pixels which may fall around e.g. 500 nit), i.e. to optimally looking luminance positions for an HDR image, on the SDR luminance range one needs to squeeze them together to fit along the smaller luminance range. Still, this can in principle be done in various manners, and one would prefer it to be done in such a manner that the SDR image still conveys as much a possible the HDR look given its limitations, in particular, as according to how the content creator thinks that should be (which can be named the SDR master grading). I.e. one needs to apply content-dependent optimal luminance mapping functions, also currently described as dynamic metadata. All the corresponding SDR image pixel/object luminances are shown on the right SDR luminance range in Fig. 1, with SDR dynamic range DR_s. As the limitations of the HDR10 system became apparent to the market quickly, a new codec was proposed called Hybrid Loggamma (HLG), which is currently described in "Recommendation ITU-R BT.2100-1 (06/2017): Image parameter values for HDR television for use in production and international programme exchange, table 5". This codec encodes the HDR image by transforming it with a static loggamma curve, so that an image results with is relatively pleasing when displayed on legacy SDR TVs: SDR_HLG (i.e., a fixed transformation is performed at the encoding side, which can be likened with a tall person bending his head when needing to go through a small door, and at the decoding side the original HDR image is retrieved by applying the inverse of the same fixed loggamma function on simultaneously the three RGB color channels, as if the person stretches his head again). Whereas the HDR10 codec is at the moment of writing the elected choice for HDR blu-ray disks, this HLG codec is somewhat more popular for television broadcasting, because of its backwards compatibility with deployed SDR systems, but also because of its ease of use. One just needs to apply this fixed loggamma function trick, and nothing more sophisticated is needed, like e.g. image-optimized dynamic downgrading metadata, encoding the shape of variable shaped functions. One can ponder whether such simplicity does not come at a cost, namely the quality of HDR imaging given that there can be many different types of HDR scene, and luminance re-grading can be complex. Indeed, even when one can pose questions about the visual quality of the SDR_HLG image (the application of the loggamma function leads to significant color errors, e.g. a hue change making a nice orangish sunset appear ugly yellow, etc.), there is at least one further aspect missing in the HLG philosophy, which good quality future-oriented HDR codecs should have: **display adaptation** capability.

Indeed, it is already clear in the current market, that not everybody will have either a 5000 nit PB_D display or a 100 nit PB_D display, since 1000 nit PB_D displays are on sale, but also e.g. 700 nit, or 500 nit, or 2000 nit (and even a 10,000 nit prototype was shown), and given that in the future people may want to watch their video content on anything ranging from a mobile phone to a home cinema with projection, it is expected that the PB_D can be anything. Ergo, there is a need to calculate images with a PB_C in-between the two graded images master HDR and SDR (so-called display adaptation), which one may call medium dynamic range (MDR) images (e.g. for a 800 nit PB_D display). This can in theory also be done in many ways, but there are worse and better ways, the better ways conveying more optimally for any display situation the engrained look of the HDR image, i.e. how the content creation would like to see it optimally displayed.

It should be understood that it may not always be a trivial task to optimally map all the object luminances for all these very different types of HDR scene to optimal luminances available in the much smaller dynamic ranges. Not only can there be a matter of taste, for which the technology must cater, i.e. it must not frustrate the content creator by not being able to do what he desires, but color technology being complex, it is not always trivial to do the mapping when a particular technology with a particular color space has been elected (which is typically decided based on practical market aspects such as compatibility with existing technologies or complexity of the ICs which need to do the calculations).

However, applicant succeeded in designing a system which is able to do all the desired aspects, irrespective of whether the customer desires the master HDR images to be communicated to receivers actually as corresponding backward compatible SDR images, plus the appropriate at least luminance remapping function (F_L) to be able to reconstruct the HDR image at the receiving side (by applying L_HDR=F_L(L_SDR) in which L_SDR is the luminance of any pixel being processed in the SDR image as received, and L_HDR is the correctly reconstructed HDR luminance for that pixel), or, whether actually the HDR images are communicated, but then together with functions F_ct comprising at least luminance mapping functions F_L and typically also color mapping functions F_C for downgrading to the SDR image, or any MDR image. The difference of our approach with the HLG approach, is that we can send functions F_ct in communicated metadata which are optimally tuned per shot of images of a same HDR scene or even per image, according to the particular needs of that image, i.e. how it is best mapped to the severely more limited e.g. SDR luminance range. E.g. mapping the sun to the maximum of any image coding (PB_C) for any display (i.e. also PB_D) may be a reasonable thing to do, but if there are bright sunlit clouds around the sun the criterion becomes more critical: one needs to reserve a sufficiently large upper sub-rang of the SDR range so that one can still reasonably nicely see all the beautiful bright values of the cloud rims, yet, this range shouldn't be so large as to push down the remaining sub-range for darker pixel colors too much, otherwise the cowboy will look too dark. Ergo, on such an image the concern of determining an optimal F_L will be mostly on the upper end, whilst for a dark scene the concern will be mostly on the dark end, so that e.g. a criminal partially hidden in a dark decor will neither become invisibly dark nor to plainly illuminated. It can be imagine by the reader that this is best served by having a possibility of dynamically changing luminance mapping functions, e.g. per image.

However, image pixel colors are not a one-dimensional grey value only, but are three-dimensional. Typically one likes to communicate pixel colors as YCbCr, and hence some color re-grading processing architectures came to work in this color space also.

Ideally, a pixel color would be brightened so that only its luminance L changes (which importantly is not even the same as the luma Y of YCbCr), but its "own particular color", in precise terms its chromaticity being its hue and its saturation, should stay the same (e.g. an Luv color representation). The CbCr components of YCbCr are not "own color" characterizers, but rather so-called chrominances, because they vary not only with the saturation of a color, but also with it luminance. This is quite important when one starts doing re-grading by which the luminance of the input color, say the SDR image color, changes to a different one for the e.g. MDR image: if the luma (related to the luminance via the OETF) of the triplet is not in correspondence with the CbCr values, the saturation of the pixel will be incorrect (and even more serious color errors can occur, e.g. involving hue errors)!

However, with his research of the previous years, applicant has shown to be able to produce quite good results with his technical system, both when upgrading a SDR image to a HDR image for reconstruction, and when downgrading a HDR image e.g. PQ-defined (Perceptual Quantizer being the OETF for the HDR10 encoding) to any MDR image as needed. And applicant was able to formulate various powerful display adaptation techniques, based on needing only a HDR master graded image and a corresponding SDR image, for which the reader can consult WO2017108906.

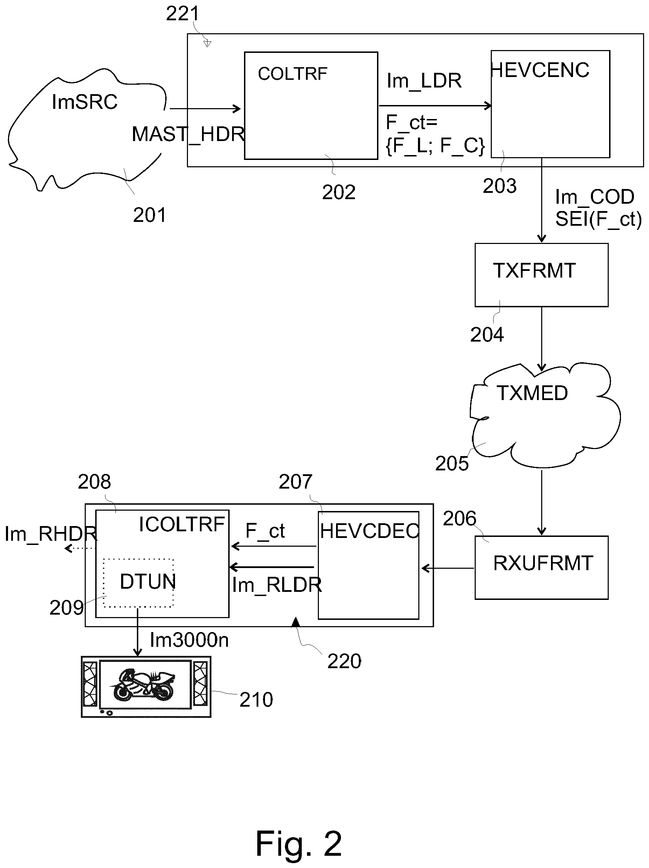

Fig. 2 schematically shows the high level overview of such a codec, which in particular is well able to function with existing video communication technologies, e.g. over satellite or internet-based, etc (whereby the reader should understand the invention's principles are applicable to other systems than the exemplary system for explanation also). Although in such a HDR video communication system one actually communicates only one type of graded images as transmitted pixelated images, typically though not exclusively in this application SDR images, because in our system one also adds in metadata one or more functions defining the HDR image pixel colors and in particular HDR luminances from those SDR images, one has at the same time communicated HDR image looks for the scene also (i.e. without actually needing to communicate HDR images, like in dual image communication, or at least a second layer of pixelated HDR image data).

Encoding only one set of images for various time moments, i.e. with the correct look graded in, i.e. image object luminances as desired, which are converted via the appropriate OETF to pixel lumas and chrominances, means that one can encode in e.g. a 10 bit legacy MPEG HEVC or similar video coding technology now HDR image information just as if it was an SDR image as usual.

This fulfills the dual criterion that a) the relative luminances of all objects are so determined that they will look correct or at least plausible on a 100 nit PB_D display, e.g. when a legacy video system receives our backwards compatible SDR image and decoded it with a Rec. 709 EOTF; and b) new HDR capable systems can determine an accurate replica of the creation-side master HDR images.

Thereto, a set of appropriate reversible color transformation functions F_ct is defined, as is illustrated with Fig.

2. Fig. 2 shows non-limitedly a typical system of the SDR-communicating type, for the purpose of explaining the basic concepts. These functions may be defined by a human color grader, to get a reasonably looking SDR image (Im_LDR) corresponding to the HDR master image MAST_HDR, whilst at the same time ensuring that by using the inverse functions IF_ct the original master HDR (MAST_HDR) image can be reconstructed with sufficient accuracy as a reconstructed HDR image (Im_RHDR), or, automatic analysis algorithms may be used at the content creation side for determining suitable such color transformation functions F_ct. The IF_ct functions can be determined from the forward, HDR-to-SDR mapping F_ct functions as communicated, or, the system may even directly communicate the IF_ct function(s).

The color transformer 202 typically applies the F_ct luminance mapping of the relative luminances of the master HDR image (MAST_HDR) pixels, i.e. normalized so that the maximum luminance is 1.0. For understanding the present invention's concepts in a simple manner, one may for simplicity assume it uses a 4th power luminance mapping function (L_out_SDR=power(L_in_HDR; ¼)) for deriving the normalized SDR output luminances of the pixels of the 100 nit PB_C SDR output image Im_LDR (i.e. the right side of Fig. 1), i.e. that such a function gives a reasonable look for the SDR graded corresponding images to the master HDR image of the scene (reasonable meaning for the particular scene such aspects like e.g. that a large percentage of the shadowy areas will not look too dark, lamps and other luminous objects will pop as desired by virtue of them having still a reasonable inter-region contrast with the darker image regions even in the SDR image, at least as far as the SDR luminance dynamic range allows, etc.; for other images other factors may contribute, but such details are not essential nor limiting for elucidating the technical components of the present invention). Obviously the luminance mapping functions can in general be more complex, but such details are not needed for understanding the present application's techniques.

Since the receivers must be able to reconstruct the master HDR image from the received corresponding SDR image, or at least a close reconstruction but for some compression-related artefacts, apart from the actual pixelated images also the color mapping functions F_ct must enter the video encoder 203. Without limitation, we may assume that the video is compressed with a MPEG HEVC video compressor, and the functions are stored in metadata, e.g. by means of the SEI mechanism or a similar technique.

So after the action of the content creating apparatus 221, from the image communication technology perspective, the video compressor 203 pretends it gets a normal SDR image as input, and more importantly: outputs what is technically a SDR image, decodable with the Rec. 709 standard SDR luma specification. So then the further technology, e.g. a transmission formatter 204 applying all the necessary transformations to format the data to go over some transmission medium 205 (e.g. coding to store on a BD disk, or frequency coding for cable transmission, etc.) can just apply all the typical steps it used to perform in the SDR coding paradigm.

Subsequently the image data travel over some transmission medium 205, e.g. a satellite or cable or internet transmission, e.g. according to ATSC 3.0, or DVB, or whatever video signal communication principle, to one or more receiving side(s).

At any consumer or professional side, a receiver 206, which may be incorporated in various physical apparatuses like e.g. a settopbox, television or computer, undoes the channel encoding by applying unformatting and channel decoding. Then a video decompressor 207 applies e.g. HEVC decoding, to yield a decoded SDR image Im_RLDR, and the color transformation function metadata F_ct. Then a color transformer 208 is arranged to transform the SDR image to an image of any non-SDR dynamic range. E.g. the 5000 nit original master image Im_RHDR may be reconstructed by applying the inverse color transformations IF_ct of the color transformations F_ct used at the encoding side to make the Im_LDR from the MAST_HDR. Or, a display tuning unit 209 may be comprised which transforms the SDR image Im_RLDR to a different dynamic range, e.g. Im3000n (in this example having a PB_C=3000 nit, but in general any PB_C lower or higher than the PB_C of the input image, typically at least by a difference of 10%) being optimally graded in case a connected display 210 is a 3000 nit PB_D display, etc. We have non-limitingly assumed the video decoder and color transformer to be in a single video re-determination apparatus 220. The skilled reader can understand that one can similarly design a topology which communicates e.g. HDR images with PB_C=10,000 nit, and the color transformer makes output HDR images with e.g. PB_C=2500 nit, for a corresponding 2500 nit PB_D TV or monitor.

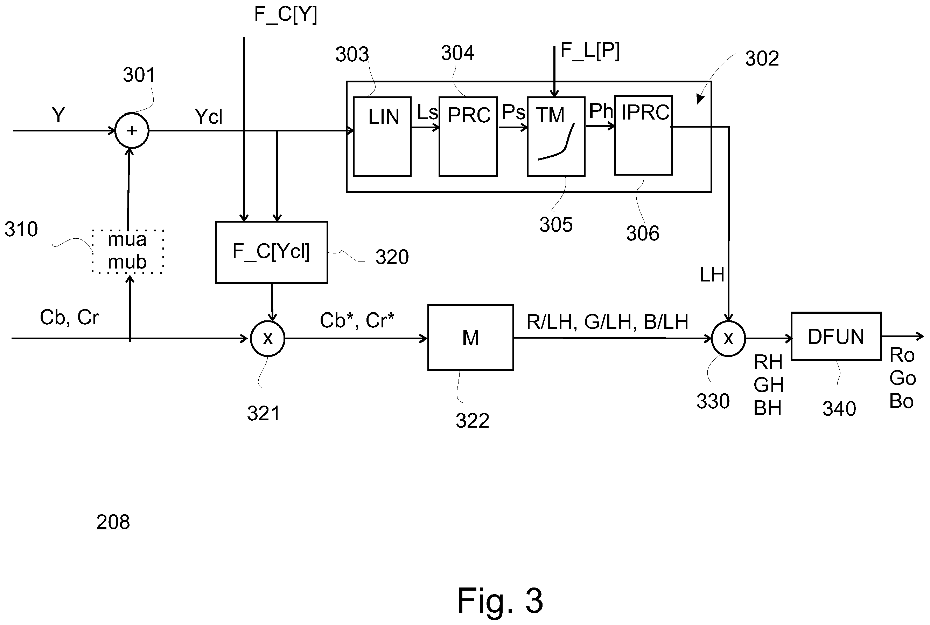

Fig. 3 shows in more detail the topology of the color processing of our preferable color transformer 208, which as said above can be used to either transform an incoming image of lower dynamic range into an image of higher dynamic range as decoded output, in particular reconstruct the original master HDR image from a received SDR image (or by calculating the appropriate corresponding PB_D-dependent functions F_L* and F_C* a display-adapted MDR image from the SDR image), or, an SDR or MDR image can be downgraded on the same processing topology in case a HDR image was received (obviously with differently shaped functions: a concave e.g. 4th power function is shown in 305 for upgrading received SDR to HDR, but in the other direction this would be a 1/4th power function to obtain the same SDR from the same HDR images being the input images at the receiver). The luma Y and chrominances Cb and Cr are input for each consecutive SDR image pixel being processed. Optionally, a derived luma Ycl can be calculated with fixed or received parameters mua and mub, according to Ycl=Y+mua*Cb+mub*Cr. This creates a better measure of luminance over the various possible chromaticities, since the non-linearity of the OETF which defines the luma and the chromaticities introduces a problem that luma Y is not a perfect one-dimensional representation of the SDR pixel luma (hence nor is it necessarily always a good starting point for the ultimate HDR luminance LH).

The SDR pixel color is luminance-regraded, e.g. darkened for a dark SDR color to obtain a really dark HDR color, following two processing paths: an upper path with luminance mapping unit 302 which determines the correct luminance of the HDR pixel to be output, and a lower path with correspondingly determines the suitable chrominances of that HDR color {RH, GH, BH} (or in fact chromaticities in the end for the visual effect to the viewer). Starting point is that the chromaticity doesn't change in the transformation, because a certain green shirt shouldn't become another color of shirt when it is only being brightened or darkened, however, in the tip of the realizable color gamut some other optimization considerations may be at work (which color processing exactly is actually elected at the content creation side and implemented via the color processing function F_C[Ycl] is not important for understanding this HDR image decoder topology; it may be noted that the shape of F_C[Ycl] could partially be determined on information received from the content creation side in color mapping metadata, but also in some embodiments the F_C[Ycl] function could be determined in the receiving side color processing apparatus, e.g. in a software module connected to the color transformer which loads the function in a LUT, but typically the shape of F_C[Ycl] will inter alia depend on the shape of the luminance mapping function, and potentially other viewing-side related factors like characteristics of the display on which the image is to be displayed).

Our preferred luminance processing typically starts with a linearization by linearizer 303, which receives the luma Ycl, and outputs a linear SDR luminance Ls (typically be performing a square power operation). This Ls value represents the relative SDR luminance in a normalized to 1.0 gamut. Thereafter perceptualizer 304 calculates a perceptually uniform version of this luminance Ls: Ps.

E.g., the following equation is preferably used:

$$Ps = \log(1+(RHO-1)*power(Ls;\ 1/(2.4))\ )/\log(RHO)\ \textbf{[Eq. 1]}$$

In which RHO is a value which depends on the peak brightness PB_C of the incoming image, e.g. in this example such SDR image has by definition PB_C_SDR= 100 nit, which corresponds to a RHO=5.7.

Thereafter tone mapper 305 calculates the HDR luminance for this pixel as desired (according to what the content creation side specified as desired in the co-communicated luminance function F_L[P], which may e.g. be a LUT with an output value for all possible P=Ps values between 0.0 and 1.0; or alternatively one or more parameters for parametrically defined functions), still in perceptually uniform representation: Ph.

This is the core part of the luminance mapping to derive nicely looking images corresponding with the master HDR image look given the limitations of the calculated output image's PB_C, an hence potentially this function can be quite complex, but how exactly it is determined is not relevant for understanding the present invention, as it works similarly whatever the F_L[P] function shape. Lastly an inverse perceptual mapper 306 determines the linear luminance LH (or in practice for various reasons it may represent that linear HDR luminance in the square root domain, i.e. output LH*=sqrt(LH), but that detail can also be ignored for the present elucidation). The equation used is the inverse function of Eq.1, but typically with a different RHO value, which depends e.g. on the PB_D of the display for which the optimal MDR image is calculated. This yields the correct HDR luminance LH, with which the normalized ("luminance-independent") RGB components R/LH, G/LH, and B/LH need to be scaled, to obtain the correct HDR color in an RGB color representation: {RH, GH, BH}.

These color components R/LH, G/LH, and B/LH are not immediately obtained, on the contrary, the correct corresponding color processing needs to be done (corresponding to the luminance processing).

For this, the chrominance processing path gets a color processing function F_C, and for this elucidation we assume that saturation multiplier deriver 320 outputs a multiplication constant for each possible Ycl value the pixel being processed may have (which is the same as its luma Y as encoded in the received SDR image in case mua=mub=0, but otherwise Ycl is calculated by correction factor deriver 310 and adder 301).

The Cb and Cr values are multiplied by this F_C[Ycl] value, by multiplier 321, to obtain the correct Cb* and Cr* values:

$$Cb^* = F\_C[Ycl] * Cb;\qquad \textbf{[Eqs 1-bis]}$$

$$Cr^* = F\_C[Ycl] * Cr.$$

Typically the saturation multiplier deriver 320 may get an external specification of a saturation function prescription F_C[Y] for any possible Y value which could occur (e.g. from a metadata reader of the apparatus which comprises the color transformer), and then it fills in the current pixel's Ycl value to obtain the needed multiplier F_C[Ycl].

Via standard matrixing known to the skilled person (i.e. with the fixed coefficients for re-calculating square root RGB values from the Cb and Cr values, which coefficients depend on the color primaries elected, i.e. typically those primaries that the connected display has, e.g. Rec. 709 primaries, or Rec. 2020 primaries in case it is a wide gamut HDR display) normalized color components R/LH etc. are calculated by matrixer 322.

Finally multiplier 330 derives the correctly scaled HDR RGB values RH, GH, and BH (though these may still be in a normalized to 1.0 representation). Note that because the three components are scaled by the same LH factor, the multiplication may be done in the sqrt-representation of the color components (as well as the linear representation), but typically after matrixing R/LH, G/LH ans B/LH will be sqrt-compressed, so the reader may assume that the inverse perceptual mapper 306 maps to the sqrt domain (i.e. does the concatenation of the inverse Eq. 1 and a sqrt function).

Lastly a display conformance unit 340 may apply math to adapt to what a display may need as input (e.g. PQ-OETF-defined lumas of the HDR luminances, but also potentially a further optimization taking into account a viewing environment characterization in which the display resides, etc.; to keep this introductory part simple, the reader may for now assume that display conformance unit 340 merely applies a square power function to the three separate color components RH, GH, and BH). We would like to note that the reader can understand that some of this technical components can in practice be combined, e.g. some of the luminance processing path units, e.g. all processing of unit 303 up to 306 could be formulated as a single P_LUT, which is useful when doing display adaptation (until now we explained only the reconstruction of the master HDR 5000 nit PB_C image from the received SDR image), because then according to any strategy the correct functions for mapping to e.g. an 800 nit PB_C image according to any optimal display adaptation strategy can be so loaded as a P_LUT*. But the explicit elucidation into these parts gives a better in-depth background inside into the principles of our HDR (de)coding and handling technology, which is useful to understand the principles of this present invention and its various embodiments. For further details of our approach the interested reader is pointed to: "ETSI TS 103 433-1 v 1.2.1 (AUG 2017)" which standardizes the SL_HDR1 possibility (which communicates solely SDR images as the corresponding representatives of the creation-side master HDR images), and "ESTI TS 103 443-2 (JAN 2018)" which standardizes the SL HDR2 possibility (i.e. which communicates the master HDR images themselves, and downgrading functions allowing HDR image decoders to calculate the correct MDR or SDR images, as the receiving-side situation may be, i.e. according to the content creator's artistic vision on how such re-grading should specifically happen, as communicated in the color processing functions F_ct, i.e. at least F_L and potentially F_C). Obviously various players in the HDR eco-system will select at least one of those options depending on their particular needs (e.g. a large installed base of SDR viewers for the coming years, etc.), and receiving side apparatuses like e.g. Settopboxes, TVs, computers and the like may typically be enabled to decode both possibilities, depending on which images are incoming.

If standardization of HDR video codecs for all video uses was a simple as universally agreeing to select such a powerful well-working codec as the codec to be used, HDR technology development might have been finalized by now, and the present invention might not have been needed. However, for certain reasons, some content creators have elected to use the HLG coder as their standard coder (not to be deviated from at least for the coming time, ergo: they communicate all their HDR content as HLG-encoded SDR images). This has as problems that a) the quality of these decoded images may not be perfect, and our technology may well be used to improve on that; and b) we may need to further tune our technology in case we get such HLG-coded HDR images as input, since our technology must be agnostically capable of handling all possible HDR image codings that exist in the market (or at least most of them: the in practice more popular ones), for all possible use situations.

Both problems are not so trivial to handle in fact.

This, apart from color processing being difficult in general, has to do with the fact that the HLG codec somewhat strangly defines the luminances of its colors with an OETF which starts out as a gamma function, but then halfway through the code suddenly becomes a logarithmic function. But there are more problems due to how this principle is embedded into the total HDR handling philosophy of the creators of HLG, and how according to them content should be created (even if this may limit the freedom of the content creator as to what types of HDR image categories it can make). It might prima facie even be thought that the two manners of coding are totally incompatible, since HLG works from a **relative** coding point of view (which has as a primary philosophy that one should always map the brightest color in the coding to the brightest color on the display, i.e. map PB_C onto PB_D), whereas our coding philosophy started from an **absolute** coding point of view: the content creator is uniquely defining which luminances should be displayed for all image object pixels, provided the viewer has a sufficiently good display obviously, and the optimal display adaptation to any particular display at the viewer's premises is a secondary technical challenge).

SUMMARY OF THE INVENTION

The problem of having HLG-type HDR video handled in our HDR coding philosophy and corresponding color processing topology is handled by determining an image color transformer (208) comprising a luminance mapping unit (302) and a chrominance mapping unit (321), arranged to get as input an YCbCr-defined pixel color of an input image (Im_RLDR) in which the luma component (Y) is defined by an opto-electrical transfer function which allocates lumas for a lower part of a range of pixel luminances (DR_h) according to a square root function, and lumas for an upper part of the pixel luminances according to a logarithmic function, and arranged to calculate an output color (RH,GH,BH) of an output image (Im3000n) having a dynamic range which is different from the dynamic range of the input image, wherein the image color transformer is arranged to receive a luminance mapping function (F_L[P]) to be applied to the pixel luma yielding a resultant luminance (Lmda), and a chrominance mapping function (F_C[Y]) to be applied to the pixel chrominances yielding output chrominances (Cb*, Cr*),

- characterized in that the color transformer comprises a scale factor determiner (400) arranged to determine a scale factor (LAM) which is calculated so that for any received luminance mapping function shape the value of the resultant luminance (Lmda) which is obtained by luminance mapping an input pixel luma having a value equal to 0.5, is after multiplying said value of the resultant luminance by the scale factor identical to the luminance with results from applying the inverse of the opto-electrical transfer function to an input pixel luma having a value equal to 0.5;
- and which color transformer is arranged to determine an adjusted luminance (Ladj) by multiplying the resultant luminance (Lmda) which is obtained by luminance mapping any input pixel luma by the scale factor (LAM), and arranged to use the adjusted luminance and the output chrominances to determine the output color (RH,GH,BH).

The dynamic range and in particular its peak brightness (PB_C) of the output image can be larger or smaller than the dynamic range of the input image, depending on for which technical scenario the color transformation is performed. The output image may be supplied for storage (e.g. on a hard disk for later watching, e.g. in a transcoding scenario), or the images may be directly sent to a display for displaying them. A typical example of the first scenario is the case where the on a 100 nit PB_D display displayable HLG image is reconstructed (luminance upgraded) to a 1000 nit PB_C HDR image, e.g. stored as linear RGB-values or PQ-coded lumas. In the second scenario, the HLG image which is good for display on 1000 nit displays (also) can be display adapted to e.g. a 950 or 1150 nit PB_D display (in principle the relation between the input and output PB_C can be anything, but it makes sense to calculate a new image if there is at least a 10% difference, but since typically HLG is always backwards compatible for 100 nit legacy SDR displays, and HDR displays always have a considerably higher PB_C, there will always be some reconstruction of the amount of HDR effects, as they were created in the master HDR image.

The normal application of a HLG-type, or more precisely HLG-encoded, image is that it codes HDR images which can have pixel luminances up to maximally 1000 nit (i.e. its PB_C_HDR_HLG) as backwards compatible SDR_HLG images (this is the normal commonly agreed manner of coding HDR images according to HLG, if nothing more specific is specified: for whatever HDR scene, a 1000 PB_C master HDR image is created, and that image is communicated as an SDR image after applying the fixed HLG OETF to the 0.001-1000 nit HDR luminances to obtain SDR lumas, or in fact the corresponding operation which calculates non-linear R'G'B' SDR color components for image communication).

Ergo, this is the normal situation in which our current invented technical embodiments can process such HLG-encoded HDR image communication scenarios, which would be the default scenario for e.g. a broadcaster who has created a HDR production of a sports event, with a HDR camera capable of simultaneously accurately capturing bright sunny regions and shadow regions of the stadium, and the production stored as HLG-encoded video images for later broadcast.

However, the present technology can also work in embodiments in a new manner in which the master HDR has a higher than 1000 nit coding peak brightness PB_C, at least up to 2000 nit PB_C (which is an important difference, because one can encode all kinds of "ultra-HDR" effects in the 1000-2000 nit sub-range, e.g. sunlit cloud rims, or higher quality explosion fireball structure, etc.). Although the creators of HLG sometimes claim that because of its relative (map PB_C to PB_D) coding and displaying philosophy it can in theory encode any PB_C, this is where in practice already a major conceptual difference between HLG-encoded HDR video and the other (absolute) HDR video encoders exists, which any usage by the other coders (e.g. a transcoder) need to find a solution for. In fact, it is generally accepted that the HLG codec can work for 1000 nit PB_C video (fixed), and that higher PB_C are in principle possible via a trick, namely one maps the e.g. 2000 nit HDR master video to 1000 nit HDR video via a so-called bridging luminance mapping (but one can philosophically ponder whether in this manner one is not just encoding a 1000 nit simulation of the original 2000 or 4000 nit HDR master image, because since HLG doesn't have dynamic luminance mapping function metadata communicated, these 1000 nit functions cannot be reversibly reconstructed).

It is shown below that some of the embodiments can also add such reversibility to the HLG-philosophy, and be able to accurately, in fact fully transparently, reconstruct the original 1500 nit or 2000 nit master HDR images.

To better understand the invention, one must understand also what the colorimetric issues with the HLG codec are, that can be mitigated by the present technology. Apart from some color errors such as hue shifts due to the fact that a highly non-linear OETF is applied to the three color channels separately in the SDR-HLG creation, applicant's researchers found major inconveniences with both the typical brightness and typical contrast of HLG_SDR images. This can of course be understood as plausible from the technical philosophy: HLG considers that any HDR image (no matter of which type of scene it was, and how it was lit, e.g. with brightest lights in some scenes only a little brighter than the average and dark luminances, whereas much more bright in other scenarios; or how it was captured and color graded potentially including many special effects) can be mapped to a good SDR image by a fixed loggamma OETF (which could be reasonable if one follows tight production constraints for e.g. a news show, or maybe even certain outdoors real-life productions, but could be questioned when one needs to code just any potential input video, such as e.g. amateur content, or spectacularly designed HDR movies). The more advanced, dynamic metadata using codecs, consider that each kind of image may have its own optimal mapping to e.g. the SDR image, e.g. a dark scene may need a luminance mapping function which primarily brightens the darkest regions to have them well visible (say for easy of understanding a power law with a power smaller than 1, though in general a more sophisticated function), whereas a function processing mostly very bright skies with clouds might essentially work starting from a linear mapping around white, and taking care of the contrasts near the clouds, whereas another image may desire e.g. a stretching of the middle grey contrast whilst diminishing the darkest luminances towards deeper blacks (which could be done by a power law with p>1), hence, one needs to encode those mapping functions in metadata for the images of the video to which they apply (and especially for backwards compatible SDR image communicating HDR coders, because then those functions are needed for the HDR reconstruction). It should be noted to avoid misunderstanding that the dynamic image-dependent nature of the luminance mapping function is already important when solely SDR images need to be created corresponding to the master HDR images, but if one adds display adaptation involving the making of several different PB_C images for several different PB_D display, the needs of the luminance mapping may be even more dynamic (but at least typically the mapping for SDR to MDR is derived from the mapping function for SDR to master HDR).

As an example of a luminance error, it was e.g. found that in the HLG-type SDR images dark regions where oftentimes too light, leading at least to less preferred so-called milky blacks, but potentially also a too visible monster in a horror story, etc. Furthermore, the HLG mapping often had the effect that it looked like the brightness of the brighter parts (which diminished) spilled into the darker parts, leading to a reduced not very HDR-ish inter-region contrast (e.g. if one has a lamp shop, with a dark street at night outside, the lamps will look as if they illuminate the dark street pavement, which makes the image look more low dynamic range-ish than it should).

In addition to those colorimetric errors, the major problem is that HLG never considered a display adaptation, and it can even be argued that without dynamic metadata they hardly ever could define a good display adaptation. The only thing they did is implement a kind of opto-optical transfer function behavior (but that was originally designed to take viewing environment brightness into account, rather than display specifics, or at least one can question whether one function can tackle two separate issues simultaneously, sufficiently).

Basically, what the HLG coding standard prescribes, is that for the 1000 nit reference situation (i.e. in case the viewer happens to have bought a 1000 nit PB_D display, with the image coding already being typically 1000 nit PB_C as explained above), a gamma 1.2 power must be applied. It is assumed that (whatever the surround environment brightness?) the images will look good on displays with lower PB_D if that gamma is according to the creators of HLG lowered somewhat, and on displays of higher than 1000 nit PB_D, if that gamma is increased somewhat. In contrast to this, applicant's decoder can calculate and load whichever desired display adaptation luminance processing, not just taking into account the PB_C of the display (i.e. how bright it can renders the brightest pixels, and how this would be differently needed for any particular image, e.g. an image with explosions which should look as bright and powerful as possible given any display limitation, versus an image that does not even have bright image regions), but also its black behavior, surround illumination, and potentially even preferences such as viewer particulars. So with the below technology, relative simple HDR can be used, as it was defined, like SDR can be used as "really bad HDR images", but then in a much more powerful framework, allowing increased quality and/or functionality. From applicant's experiments, the inventor found there seemed to be sufficient room for improvement for all of these inconveniences of HLG-type HDR video coding, leading to the technology taught in the present patent application. Note that because of the existence of several HDR video coding standards (and corresponding production approaches and guidelines), there is at least a desire in the market that such standards are at least largely compatible in the sense that video stored according to one standard can easily be transcoded into another one (this would mean e.g. that an OTT content provider could now decide to offer his catalogue at least initially coded according to the first standard without too much worries, since it could later be easily transcoded, with cost but at least doable, with another codec which by then became dominant in the market or at least sufficiently popular).

E.g. from the perspective of the middle man, e.g. a cable tv operator, such a transcoding should ideally be a simple thing, like pushing a "convert" button, even if the task may be daunting colorimetrically; all other scenarios will create major problems somewhere down the line, since e.g. the cable operator doesn't like to beg the content creator to create an entirely new coding of the content for him.

Such transcoding may seem relatively straightforward prima facie if it was just a matter of having two codecs which differ only by having a different luma code allocation function for the 0-1000 nit luminances, i.e. a different OETF, and in the other direction from 10 or 12 bit lumas to luminances via the corresponding inverse EOTF. E.g. if codec 1 put lumas in its YCbCr video pixel colors according to a $4^{th}$ power law, and the second codec used a fifth power law, it might not be trivial to compare the lumas themselves directly, as they would correspond to different luminances, but one could

first convert the 4th power law to 0-1000 nit luminances, and the apply the 1/5th power law to transcode the luminances to the second encoding lumas.

However, in practice often transcoding is prima facie far from easy, e.g. if there are differences in PB_C of the various coded images (or even the content production philosophy within an elected fixed PB_C such as 1000 nit always, e.g. the average luminance which the creator should give his image pixels), and in metadata which are actually a set of basis functions, where the functions of the first type may not trivially be represented by functions of a second codec design (let alone major paradigmic issues about relative versus absolute encoding and/or displaying, and corresponding technical views on what constitutes good display adaptation!). Nevertheless, if one designs a universally applicable codec strategy (good for everybody's desiderata for many years to come), one must invent all the solutions, to demonstrate the ability to handle other coding philosophies, at least approximately or sufficiently reasonably.

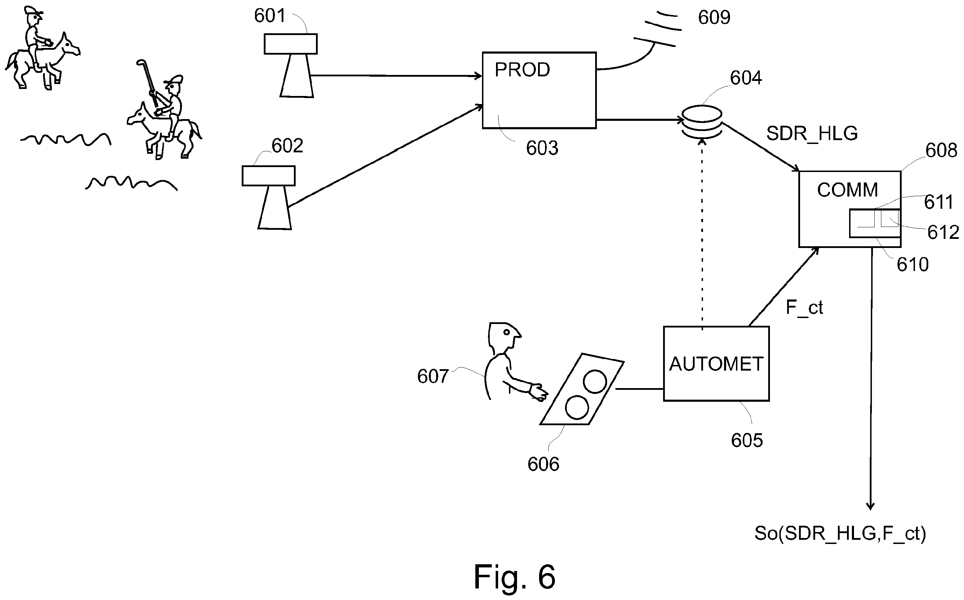

A (not intended as limiting) example of how applicant's system could work, in particular the encoding generating the luminance mapping function metadata for the decoder, is given in Fig. 6.

One or more (HDR) cameras (601, 602) record a live sports event. A production apparatus 603 (e.g. in an outside broadcasting (OB) truck, etc.) makes SDR_HLG coded video of this, and e.g. airs it directly via antenna 609 (or similar video broadcasting technologies, e.g. puts it on the internet, etc.). The SDR-HLG images are also stored on a permanent memory 604, e.g. a hard disk. At the same time, or at a later time, a metadata generator 605 generates at least luminance mapping functions, e.g. one luminance mapping function of customizable shape for each video image or time instant of presentation of said video image. As said, applicant has knowledge on how appropriate metadata should be generated for this type of HDR scenes (which was presented in previous demonstrations and patents), but these details are unnecessary for understanding the present invention's embodiments (suffices to say that e.g. an automatic algorithm can analyze the HDR images and determine functions which give a good corresponding SDR image, e.g. with neither too dark nor to bright darkest image regions, and potentially a human color grader 607 may be involved, influencing the luminance mapping function's shape according to his desiderata via user interface means 606 such as e.g. a grading console, to a degree between 0 and 100%; i.e. sometimes he may want to slightly fine-tune the already largely perfect automatically determined luminance mapping function, and sometimes he may want to determine to function entirely by himself, but other content owners may not want to involve a human grader at all).

A final video communication apparatus 608 will distribute the SDR_HLG images together with the (at least luminance mapping specifying but potentially also specifying a mapping for chromaticity aspects of the pixel colors such as the saturation) functions F_ct determined as needed to fully encode the color transformation (i.e. typically luminance up-grading from SDR to HDR, and typically to 1000 nit HDR for the present teachings). And this can be done in practice in many manners, ranging from interspersing the metadata between video data packets, or even via a separate communication such as an internet connection which is open during a one-time playing of the video at the receiver's premises, etc.

The video communication apparatus may have various physical constitutions depending on where it is used (e.g. at a direct head end content servicing site directly connected to a consumer's receiver via a communication network link, or an intermediate station in a communication network, etc.), in the manner in which it establishes and manages communication, transmits the data across the communication channel via e.g. orthogonal frequency codes, etc. (these details are from another part of technology, known to the persons skilled, and not needed in worked-out detail for describing the present invention). In general, the video communication apparatus will contain a HDR video coder 610, which will typically contain a video compressor 611 (which will calculate e.g. a HEVC or AV1 coded video stream from the SDR images to be communicated, or similar codings such as e.g. JPEG2000 coded images in succession), and a metadata formatter 612, which will code the metadata, e.g. in suitably defined SEI messages to encapsulate the at least one luminance mapping function data per image, or a similar technique. Where in this example the color transformer (or even in general a luminance mapping function determining unit in case an SDR image is already determined previously by another dynamic range conversion unit) is an external apparatus, it may in alternative embodiments also be comprised in the video coder, so that function determination is e.g. done at the very last moment before the actual video communication (which may give a simpler function to image synchronization management).

The output to any HDR video usage site (e.g. a HDR television with networking capabilities) will be a HDR video signal So, with the HLG-type encoding of the HDR image (SDR_HLG) and the color mapping function(s) F_ct either interspersed (e.g. in packet communication), concatenated, or even potentially on separate communication channels but then synchronizable so that the receiver knows to which image time instant which luminance mapping function definition should apply.

The advantage of this is that the content supplier and his various customers still get the HDR images as HLG images (or in general embodiments images that are substantially identical to HLG images, i.e. images that can safely be used by any installed base apparatuses as if they were HLG images, e.g. a TV which can only decode HLG-type HDR content), yet, for those apparatuses which are enabled to have higher HDR capabilities, our metadata functions can implement e.g. a much higher quality display adaptation to the actually available tv than the simple HLG OOTF power law, in case such a tv (or the settopbox or computer supplying signals to it) has our color transformer topology onboard its IC, which it may already have for e.g. our SLHDR-1 decoding as it is recently selected by ATSC).

Now the inventor trying to implement such image quality improving functionality for an incoming HLG image on our topology as elucidated with Fig. 3 discovered another severe problem, which hitherto was not discovered, because standard HLG use only creates the 100 nit SDR-HLG from the 1000 nit HDR master image, and then the 1000 nit HDR image is reconstructed from the received SDR_HLG image, merely by inverting this HLG OETF on the three separate R, G, and B channels, which inverse function application on a one-dimensional color coordinate is not so difficult.

The HLG OETF is standardized in "Recommendation ITU-R BT.2100-1 (JUN 2017): Image parameter values for HDR television for use in production and international programma exchange", as:

$$R' = OETF(R) = sqrt(3*R) \text{ if } R <= 1/12; = a*ln(12*R-b)+c \text{ if } 1/12 < R <= 1 \text{ [\underline{\textbf{Eq. 2}}]}$$

With a= 0.17883277, b= 0.28466892, c= 0,55991073, and R is the linear color component of an input RGB color, and R' the non-linear one (quantized to 10 bit), and similarly for the G and B color component.

However, if one alternatively tries to do general (3D) color transformations on this RGB_HLG input color signal (or typically the YCbCr_HLG representation corresponding with it, with the calculation of YCbCr from RGB being a standard principle for video engineers, in fact rotating the RGB cube on its black tip), the fact that this HLG OETF (so also luma(!), since the luma is defined as Y' =a*R'+b*G'+c*B', with a,b and c constants which as the video engineer knows are uniquely calculable from the (x,y) color primaries of a color representation) definition consists of two parts which are considerably different in their mathematical behavior becomes quite a problem, and severe color errors could occur if one unknowingly and unnecessarily jumps from one part of the curve to the other during calculation (e.g. a particular color transformation may increase the red color component a little bit, which is fine in classical SDR technology where the function is a nicely smooth function being approximately a square root, but here suddenly the red color component becomes logarithmically varying, where the green and blue ones are not). And this can be an especially problematic complexity when calculating in the YCbCr color space (which although popular was designed in the old days merely for handy color communication, not necessarily for color processing especially of the extreme change type as typical in HDR video dynamic range changes), which is already cumbersome to work with, since as said above the lumas need to be consistent with the chrominances for the color to come out correct.

After long studies the inventor came to find that the problem was manageable by calculating a value LAM, which succeeded in tracking the middle grey value of the HLG lumas (=0.5), whatever luminance mapping one desired to apply to the input colors, and therewith the possibility the keep in conformity the chrominance processing part of the pixel colors (the bottom parallel track of Fig. 3).

It can be advantageous if embodiments can calculate a further scaling factor ETA, i.e. to have an image color transformer (208) further comprising a second scale factor determiner (512) arranged to determine a second scale factor (ETA) which is determined by applying the opto-electronic transfer function to the scale factor (LAM), and arranged to scale the adjusted luminance (Ladj) to obtain a scaled luminance (Lsc), or to be more precise its corresponding scaled luma (Ysc), which the color transformer uses together with the output chrominances (Cb*, Cr*) to obtain the output color (RH,GH,BH).

This allows having a fixed size for the processing of luminance in HLG luma space (the LAM version is possible if overflow above the maximum (1.0 or whichever computer number representation corresponds to it) is allowed, but even for smaller ranges, processing accuracy is always better if the ETA value always normalizes the luma range to 1.0; see explanation under detailed description).

Given the above, one can design an advantageous embodiment of the image color transformer (208) which is arranged to determine the chrominance mapping function upper part for lumas above 0.5 based on the adjusted luminance (Ladj). The color processing in the lower part of the color gamut (i.e. in the YCbCr rotated cube the bottom "triangle") is still relatively doable, but the colors in the upper part require considerable savvy to create good looking images. The inventor found from his research that a saturation processing specification as a function of the adjusted luminance gave a good manner to control the reconstructed colors in the upper half of the gamut.

Some embodiments can furthermore have their image color transformer (208) arranged to determine the chrominance mapping function upper part for lumas above 0.5 based on the second scale factor (ETA).

A specifically useful simple image color transformer (208) embodiment has its chrominance mapping function upper part for lumas above 0.5 determined as: F_C[Y]=(1/(ETA*Ladj))*(power(max(1, Y/(ETA*Ladj); 1.4)).

Another image color transformer (208) embodiment has its chrominance mapping function upper part for lumas above 0.5 is determined as F_C[Y]=(1/(ETA*Ysc))*(power(max(1, Y/(ETA*Ysc); 1.4)), with Ysc being a further scaled luminance correlate represented in the HLG luma representation.

One can further improve on the above various embodiments in the direction of making an image color transformer (208) in which the luma Y to be used in the luminance mapping and the chrominance mapping is a corrected luma (Ycl) which is calculated from the luma (Y) of the input image pixel being processed, by a in the color transformer comprised correction factor deriver (310) which calculates the corrected luma according to Ycl=min(1; Y+max(0;mua*Cb+mub*Cr)), in which mua and mub are constants calculated by the correction factor deriver depending on the peak brightness of the output image to be calculated. This is useful because the luma axis of YCbCr is not exactly an axis which correctly, orthogonalizedly characterizes a pixel luminance, but rather there is a dependency on the chrominance values Cb and Cr, which can be corrected by the mentioned linear correction (it has as a visual effect that e.g. the brightness of red coats becomes a little more natural, and not somewhat overly glowing).

As a good practical optimal example of such a image color transformer (208) embodiment, the inventor found it well-working when the mua and mub constants are calculated depending on the second scale factor (ETA) according to the equations:

$$F=(\max(ETA;1)-1)/0.09057; \ mub=\min(F*0.146;0.21); \ mua=mub/2.$$

Another advantageous (mirroring) image color transformer (800) can be designed which comprises a luminance mapping unit (818) and a chrominance mapping unit (821), arranged to get as input a pixel color (RiH,GiH,BiH) of a high dynamic range input image (MAST_HDR), and arranged to calculate an output color (Ys,Cbs,Crs) of an output image (SDR_HLG) having a second luminance dynamic range (DR_s) which is different from a first luminance dynamic range (DR_h) being the luminance dynamic range of the input image, which output color has a luma component (Ys) which is to be decoded into a luminance by an inverse of an opto-electrical transfer function which allocates lumas for a lower part of the first dynamic range (DR_h) according to a square root function, and lumas for an upper part of the pixel luminances of said dynamic range according to a logarithmic function;

- wherein the image color transformer is arranged to receive a luminance mapping function (INVF_L[P]) to be applied to the luminance of the pixel color yielding a resultant luma (Ycl), and a chrominance mapping function (1/F_C[Y]) to be applied to the chrominances (CbH, CrH) of the pixel color yielding output chrominances (Cbs, Crs);
- wherein the image color transformer has a peak brightness output unit (880) arranged to output a peak brightness (PB_H) of the high dynamic range input image (MAST_HDR);
- characterized in that the color transformer comprises a scale factor determiner (899) arranged to determine a scale factor (LAM) which is calculated so that for any received luminance mapping function shape (INVF_L[P]), the value of an adjusted luminance (Ladj) which is obtained by multiplying by said scale factor a resultant luminance (Lmda), which is defined on a luminance range of which the maximum corresponds to the peak brightness (PB_H) and which is obtained by luminance mapping an input pixel luma having a value equal to 0.5 by applying the inverse of the received luminance mapping function shape, is equal to the luminance which results from applying the inverse of the opto-electrical transfer function to an input pixel luma having a value equal to 0.5; and which color transformer is arranged to multiply with the inverse of said scale factor the luminance of pixel color (RiH,GiH,BiH), to obtain a luma (Ycl) for use in the determination of a multiplication value (FC_[Ycl]) to be used by a multiplier (821) in a multiplication by the the two chrominances (CbH, CrH).

This transformer can be used in an encoder which gives good looking HLG_SDR, which however can encode master HDR image luminances higher than 1000 nit, and correspondingly decode them from such an encoded and received HLG_SDR by using said encoder. The decoding is exact when the output image's PB_C equals the input image's PB_C (e.g. 2000 nit), but can also yield display adapted images for lower PB_D values.

Furthermore it is advantageous to have a method of image color transformation comprising arranged to get as input an YCbCr-defined pixel color of an input image (Im_RLDR) in which the luma component (Y) is defined by an opto-electrical transfer function which allocates lumas for a lower part of a range of pixel luminances (DR_h) according to a square root function, and lumas for an upper part of the pixel luminances according to a logarithmic function, and arranged to calculate an output color (RH,GH,BH) of an output image (Im3000n) having a dynamic range which is different from the dynamic range of the input image, wherein the method is arranged to receive a luminance mapping function (F_L[P]) to be applied to the pixel luma yielding a resultant luminance (Lmda), and a chrominance mapping function (F_C[Y]) to be applied to the pixel chrominances yielding output chrominances (Cb*, Cr*),

- characterized in that the method is arranged to determine a scale factor (LAM) which is calculated so that for any received luminance mapping function shape the value of the resultant luminance (Lmda) which is obtained by luminance mapping an input pixel luma having a value equal to 0.5, is after multiplying said value of the resultant luminance by the scale factor identical to the luminance which results from applying the inverse of the opto-electrical transfer function to an input pixel luma having a value equal to 0.5; and which method is arranged to determine an adjusted luminance (Ladj) by multiplying the resultant luminance (Lmda), which is obtained by luminance mapping any input pixel luma, by the scale factor (LAM), and arranged to use the adjusted luminance and the output chrominances to determine the output color (RH,GH,BH).

Furthermore it is advantageous to have a method of image color transformation arranged to get as input a pixel color (RiH,GiH,BiH) of a high dynamic range input image (MAST_HDR), and arranged to calculate an output color (Ys,Cbs,Crs) of an output image (SDR_HLG) having a second luminance dynamic range (DR_s) which is different from a first luminance dynamic range (DR_h) being the luminance dynamic range of the input image, which output color has a luma component (Ys) which is to be decoded into a luminance by an inverse of an opto-electrical transfer function which allocates lumas for a lower part of the first dynamic range (DR_h) according to a square root function, and lumas for an upper part of the pixel luminances of said dynamic range according to a logarithmic function;

- wherein the method is arranged to receive a luminance mapping function (INVF_L[P]) to be applied to the luminance of the pixel color yielding a resultant luma (Ycl), and a chrominance mapping function (1/F_C[Y]) to be applied to the chrominances (CbH, CrH) of the pixel color yielding output chrominances (Cbs, Crs);
- wherein the method is arranged to output a peak brightness (PB_H) of the high dynamic range input image (MAST_HDR);
- characterized in that the method is arranged to determine a scale factor (LAM) which is calculated so that for any received luminance mapping function shape (INVF_L[P]), the value of an adjusted luminance (Ladj) which is obtained by multiplying by said scale factor a resultant luminance (Lmda), which is defined on a luminance range of which the maximum corresponds to the peak brightness (PB_H) and which is obtained by luminance mapping an input pixel luma having a value equal to 0.5 by applying the inverse of the received luminance mapping function shape, is equal to the luminance which results from applying the inverse of the opto-electrical transfer function to an input pixel luma having a value equal to 0.5;
  and which method is arranged to multiply with the inverse of said scale factor the luminance of pixel color (RiH,GiH,BiH), to obtain a luma (Ycl) for use in the determination of a multiplication value (FC_[Ycl]) to be used by a multiplier (821) in a multiplication by the the two chrominances (CbH, CrH).

BRIEF DESCRIPTION OF THE DRAWINGS

These and other aspects of the method and apparatus according to the invention will be apparent from and elucidated with reference to the implementations and embodiments described hereinafter, and with reference to the accompanying drawings, which serve merely as non-limiting specific illustrations exemplifying the more general concepts, and in which dashes are used to indicate that a component is optional depending on the various embodiments or uses, non-dashed components not necessarily being essential. Dashes can also be used for indicating that elements, which are explained to be essential, are hidden in the interior of an object, or for intangible things such as e.g. selections of objects/regions (and how they may be shown on a display).

In the drawings:

Fig. 1 schematically illustrates a number of typical color transformations which occur when one optimally maps a high dynamic range image to a corresponding optimally color graded and similarly looking (as similar as desired and feasible given the differences in the first and second dynamic ranges DR_h resp. DR_s) low or more precisely standard dynamic range image, which in case of reversibility would also correspond to a mapping of an SDR image coding the HDR scene, to a reconstructed HDR image of that scene;

Fig. 2 schematically illustrates an example of a technology to encode high dynamic range images, i.e. images capable of having pixel luminances up to at least 700 nit (i.e. at least 7x the PB_C of the SDR image) typically or more (in fact currently HDR image typically have a 1000 nit PB_C or more), which applicant recently developed, which can e.g. communicate the HDR image(s) actually as an SDR image plus metadata encoding color transformation functions comprising at least an appropriate determined luminance transformation for the pixel colors, to be used by the decoder to convert the received SDR image(s) into HDR images(s) which are a faithful reconstruction of the original master HDR image(s) created at the image creation side, and the re-use of typical image communication technologies already developed for SDR communication such as e.g. HEVC encoding (note that also for the variant which actually communicates HDR images + metadata, the old communication techniques and apparatuses already deployed can similarly be re-used);

Fig. 3 shows details of our typical preferred color processing involved in calculating the pixel colors of an output image of different dynamic range (different PB_C) than the input image, e.g. a HDR reconstructed image at a receiving side of the HDR image encoding information (pixellized image + color transformation function(s) metadata);

Fig. 4 shows how the LAM constant for any particular TM_PH function selected can be calculated according to the invention's principles;

Fig. 5 schematically shows a decoder according to the present invention's principles;

Fig. 6 schematically shows an example of how the supplementation of HLG-encoded HDR video with re-grading luminance functions can happen;

Fig. 7 shows graphically what happens in the calculations of the decoder;

Fig. 8 schematically shows an encoder according to the present invention's principles, which is capable of outputting good-looking HLG-SDR, yet, which can potentially encode master HDR image luminances above 1000 nit;

Fig. 9 shows how luminance mapping specifications can be concatenated at the decoder side, which is particularly useful when HLG_SDR which was generated by the encoder of Fig. 8 is received, i.e. which SDR has lumas which represent original master HDR luminances above 1000 nit;

Fig. 10 elucidates by an example what complex image-optimized luminance functions according to applicant's optimal HDR handling and coding can look like; and

Fig. 11 shows an example of a display conformance unit 340 embodiment which yield colors which are finally represented according which color representation particular displays expect as input image colors.

## DETAILED DESCRIPTION OF THE EMBODIMENTS

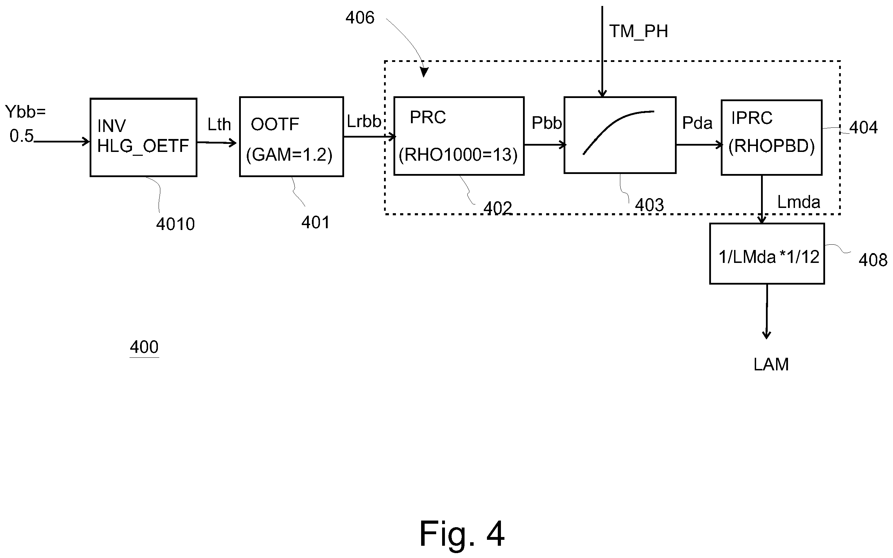

Fig. 4 illustrates (the starting point of the new insights for the new decoder and encoder) how the scale factor LAM can be calculated. This typically needs to be done only once per luminance mapping function, not per pixel, so it can be done in an auxiliary processing outside the pixel color transformer, e.g., already at the time the SEI messages containing the L_M function are received. This combines both the HDR technical way of working of HLG, and of our display adaptation capability, but everything formulated in our framework (i.e. instead of working on the three separate R,G, and B channels as HLG does, this technique employs an equivalent formulation in the luminance -or luma- dimension, of an YCbCr color calculation framework).

The so-called middle grey luma Ybb=0.5 is input (this is a point on the 0.0-1.0 axis which is determined by the HLG OETF, but for explanation of the technical calculation it can be seen as just a single numerical input, equal to 0.5) into an inverse HLG OETF calculator 4010. It is converted to a corresponding luminance value (Lth) by using the inverse of the HLG OETF (n.b. in contrast to other HDR codecs like ours which start standardization by defining an <u>EOTF</u>-because one needs to define and communicate lumas for such luminances as they have to be ultimately displayed, the creator being able to say that e.g. a lamp in a scene needs to be rendered at 4000 nit- the creators of HLG had the divergent philosophy of starting from an OETF; for precision we like to talk about the inverse OETF instead of the EOTF, because that does make clear then that the OOTF is a separate step behind the OETF).

This HLG EOTF (in fact the inverse OETF) is standardized by the following equation (in our case applied to a HLG_SDR image pixel luma Ybb instead of the e.g. red non-linear color component):

$$\text{Lth}=\text{if } (0<=\text{Ybb}<=0.5;\ \text{Ybb*Ybb/3};\ \text{else } (\exp((\text{Ybb-c})/\text{a})+\text{b})/12), \quad [\mathbf{\underline{Eq.3}}]$$

but since for the LAM calculation the value 0.5 only is used as input, this results in Lth=0.25/3=0.083.

The HLG coding philosophy also requires that an OOTF is applied (by OOTF calculator 401), which in case of a 1000 nit PB_D display image is a power function with a power value 1.2, i.e. the final normalized 1000 nit-referred HDR luminance Lrbb according to HLG is Lrbb=power(Lth; 1.2)= 0.05.

This part is still the behavior as far as the HLG HDR philosophy is concerned (in fact this emulates the HLG particulars as present in the HLG_SDR luma distribution in our color processing framework). We can see this intermediate Lrbb as a particular luminance, in a starting 1000 nit PB_C HDR image, to which our display adaptation should be applied, which represents what e.g. a human grader has specified as the optimal re-grading look needs for this particular HDR scene image, as a luminance mapping function TM_PH shape. Note that it is not per se necessary to do the luminance mapping in a perceptually uniformized representation of the luminances (units 402 and 404), but we found this to be a preferred manner to do the luminance mapping (note that in such a split-off luminance path such representational choices are equivalent, IF: one takes care of the corresponding correct chrominance handling(!), because YCbCr is not a fully orthogonal luminance-chromaticity representation, in contrast to e.g. CIE Luv color space). But that Luv color space may not be a pragmatic choice for hardware reasons, or at least for various reasons it was not liked by the various technology and content providers in the video market.

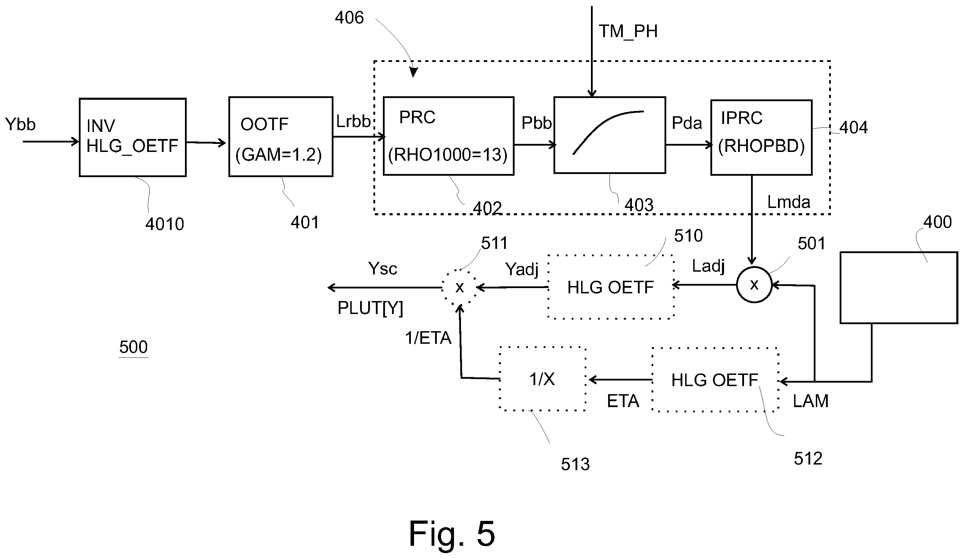

So in correspondence to our luminance mapping path for all image pixel colors (see Fig. 3 and also Fig. 5), a perceptually uniform luma Pbb is calculated from Lrbb by perceptualizer 402, which applies eq. 1, with RHO=13 because the PB_C of the input HDR image is 1000 nit.

In general, a RHO for a PB_C respectively a PB_D is calculated by:

$$RHO=1+32*power(PB\_C/10000;1/2.4) \quad [\textbf{Eq. 4}],$$

ergo for 1000 nit this gives 13.

This equation is also used with PB_C substituted by PB_D in case a conversion needs to be done for a particular display's PB_D, for display adaptation (but at this moment it is still only converting the luminances of an input image with maximum luminance equal to PB_C to perceptual lumas).

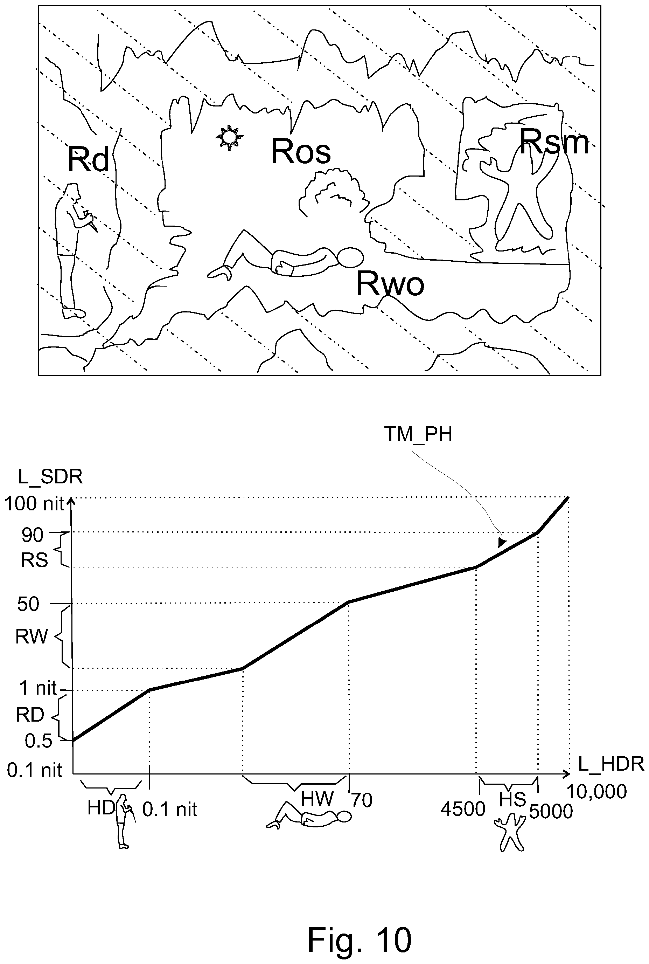

Subsequently the whatever luminance mapping function is applied to the Pbb value by luminance mapper 403, and as said such luminance function TM_PH is typically received from a content creation side (and to be clear, in case of display adaptation, rather than HDR image reconstruction, still converted to a <u>final display adaptation luminance mapping function,</u> according to the built-in display adaptation algorithm), although some embodiments of our method could also work at the receiving side, with the needed HDR to SDR re-grading and corresponding function TM_PH being determined there. This TM_PH function can for some HDR scene images be a relatively simple function, but for critical images (which may have e.g. a region Rsm in which an object with low contrast to be critically controlled in lower dynamic range images) as Fig. 10 shows, it can be finely tuned with slopes and bends conforming to the many HDR< >SDR luminance mapping needs of this particular cave seen image (with a very dark image region Rd, a middle luminance region Rwo, and a very bright sunny outside the cave region Ros; and the various HDR luminance sub-ranges HD, HW, HS mapping to corresponding sometimes critically sized SDR luminance sub-ranges RD, RW and RS). It should be clear that the simple HLG HDR codec can in no way cater for such complexity, so it must approximate it with the best it can do, or in fact since it is a fixed HDR < > SDR mapping strategy: the only thing it can do.

The new, display-adapted <u>perceptual</u> luma Pda is mapped again to a linear luminance by inverse perceptualizer 404, which yields display adapted medium dynamic range luminance Lmda. This inverse perceptualizer uses the inverse of Eq.1, and with a RHO value determined with Eq. 4 by using the particular display PB_D, e.g. 750 nit.

The inverse function is:

$$Lmda=power(\ (power(RHO;Pda)-1)/(RHO-1);2.4\ ) \qquad [\textbf{Eq. 5}]$$

Units 402, 403 and 404 together form perceptual luma mapper 406, which is our preferred embodiment for that part of the invention, but as said, the invention can be similarly embodied by applying the TM_PH in another domain (e.g. by deleting units 402 and 404, in the Lbb-to-Lmda domain directly), etc. (note that there also is a perceptual domain luma corresponding to the HLG middle grey luma 0.5).

Finally the needed constant LAM is determined in invertor 408 as:

$$LAM=(1/12)*(1/Lmda).$$

Note that the LAM value, as well as the ETA value in embodiments which use ETA, should not be clipped to 1.0 (e.g. if the tone mapping TM_PH part has the behavior of a power law with power 1.2, then LAM=2.98 and ETA=1.19).

Having determined this LAM constant, the luminance processing path can be determined, which is explained with Fig. 5.

The upper part of the luminance processing circuit 500 has the same structure as the LAM calculation circuit, but now all Ybb values (i.e. between 0 and 1.0; after normalization of the e.g. 10 bit values by 1023, or corresponding pre-operation in case of limited range instead of full range) can be input depending on the particular pixel luma coding the luminance of a particular image object, instead of just the value 0.5 only.

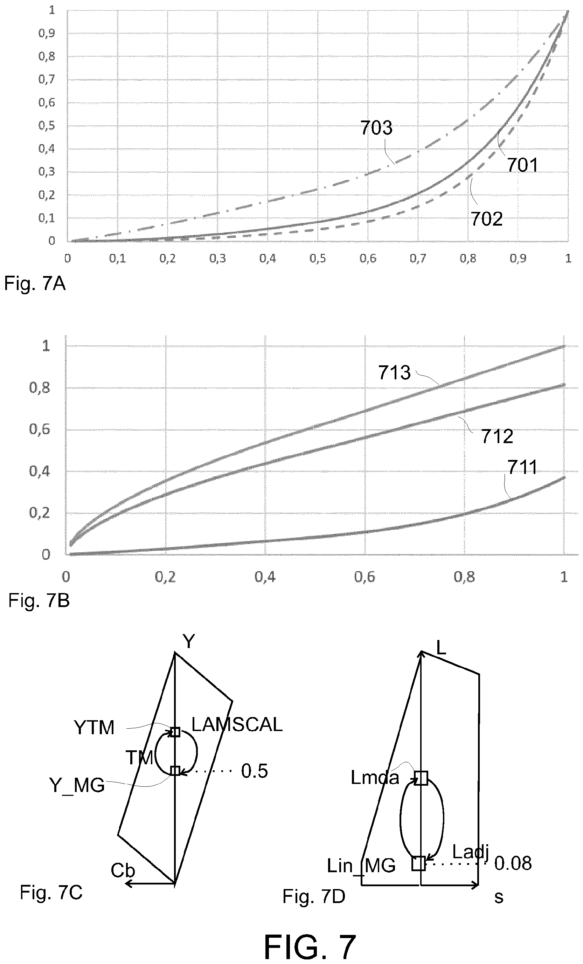

For better understanding of what exactly is going on in the circuitry, it may be useful to go to a luminance processing example illustrated with Fig. 7A.

On the x-axis are all possible HLG_SDR image pixel lumas. Curve 701 shows how they will be converted to luminances, to be read on the y-axis, and to be multiplied by PB_C=1000 nit (as said with the fixed HLG EOTF curve of Eq. 3). Because the HLG camera-capturing-prioritized relative HDR (de)coding strategy demands that the actually to be displayed luminances on a 1000 nit display (even if this is a theoretical "reference" display merely, associated with the decoding of the received HLG_SDR image to the reconstructed HDR image) are still further mapped with an OOTF which equals a power function with power 1.2, curve 702 shows the final HDR luminances for the 0-1000 nit range by applying the combination of the EOTF and OOTF.

Curve 703 is where it starts getting interesting. This is the result of applying as a third function an arbitrary TM_PH function, for which we took an example. The reader can imagine the relative values on the y-axis to be driving values for a display of PB_D.

In case PB_D =1000 nit (i.e. an actual display perfectly corresponding with the 1000 nit HDR coding peak brightness, because 1000 nit PB_C HDR was optimized to look perfect for people which happen to have such a 1000 nit PB_D display; what people with another display should do being ill-defined in the HLG HDR video handling method), we see there are many luma codes representing the relatively dark luminances up to 0.1*1000 nit (which makes sense because human vision is usually more sensitive for darker luminances, and, this is the range of the SDR luminances, and at least according to the HLG philosophy this is where most of the pixel luminances should fall also in the HDR image, as they consider HDR images to basically be SDR images, with a couple of pixels being extra bright highlights, e.g. specular reflections on metal).

Curve 703 may calculate the relative luminances (i.e. e.g. LCD pixel transmission percentages for transmitting a percentage of the fixed illumination by a less bright backlight than for the 1000 nit PB_D reference display) for say a 500 nit PB_D display actually being present and to be supplied with optimal display-adapted images in the house of user X. As one can see, in particular those relative output luminances on the y-axis (now corresponding with a multiplication after the normalization with PB_D=500 nit) corresponding to dark pixel lumas are considerably brighter than for curve 702. This can be understood if the "as equal to the master HDR artistically defined luminance look as any display limitation allows" is for the darker luminances represented as "equal absolute luminance". In such a situation, the height of the curve point on curve 703, for lumas say up to 0.4, must be exactly 2x as high for display adaptation to a 500 nit PB_D display (because one must transmit 2x as much through the LCD pixel for a display which only has a 500 nit backlight than for the reference display with the 1000 nit backlight). It should be understood that in applicant's improved method for optimally display adapting HLG-defined HDR video, the display adaptation TM_PH (and hence the resulting curve 703) can be almost anything (limited only by the artist's creative vision that the image should still look nice, and technical limitations), and so can be the output luminance of the input luma Ybb=0.5.

In general, especially at the upper end of the YCbCr color gamut, i.e. for lumas above e.g. 0.4, good display adapting luminance and color mapping may be considerably more complex than according to the simple "equal absolute luminance" rule, to be able to squeeze all different object luminance sub-range pixels reasonably in a far lesser SDR or e.g. below 500 nit MDR (medium dynamic range) luminance range, as was illustrated with the potentially "arbitrary" (the only requirement being monotonically increasing) luminance mapping function of Fig. 10.

So the new major problem that turned up was that not only can any output relative (MDR) luminance for any selected input luma jump to almost any position after applying curve TM_PH (703), this will also happen to the 0.5 luma, and as will be explained below that will be a major issue for defining good chromatic mapping in the lower path of our decoder (because there will be a mismatch between the luminance processing path and the chromatic processing path, which needs to be addressed).

Fig. 7D shows what the rest of the circuit of Fig. 5 will always do, whatever the chosen TM_PH luminance mapping function shape, in a linear luminance saturation plane cross-section for a particular hue, in this case the yellow-blue cross-section.

The luminance Lin_MG luminance corresponding to the input middle grey value will jump to any "a priori unpredictable" position Lmda after applying our display adaptation optimization (but of course predictable when knowing our display adaptation mathematical decoding system; once a particular TM_PH is selected this is characterizable), so the LAM-scaling must be so determined that a final luminance Ladj is again equal to Lin_MG. Since there corresponds a unique luma to this Lin_MG luminance, the same can also be shown in a YCb cross-section color plane in Fig. 7C, with the LAMSCAL operation canceling the effect of the luminance mapping TM on the input luma.

Returning to Fig. 5, the new HLG-compatible decoder realizes this as follows. The with Fig. 4 explained scale factor determiner (400) supplies the constant LAM to multiplier 501, to calculate a correctly scaled adjusted luminance (Ladj) according to:

$$Ladj=LAM*Lmda \qquad [\textbf{Eq. 6}].$$

Optionally, some embodiments may further use a opto-electronic transformer 510, which applies the HLG OETF to the scaled luminance, but then a new scaling needs to be done by multiplier 511 (by multiplying Yadj and 1/ETA).

This is illustrated with Fig. 7B.

Curve 711 is now the scaled with LAM version of the display adapted luminance mapping 703, ergo, which for luma 0.5 yield the desired Lin_MG value 0.08 (or 80 nit). I.e. this can be seen as the Ladj(Ybb) curve for all Ybb luma values. But because the shape of the TM_PH could be anything, the position of other luminances and especially the maximum luminance of the whitest white color can be anything after the scaling (here we see curve 711 ending at 0.4, but for another TM_PH it could end at e.g. 3.0, so it is important that no clipping is performed on Ladj, nor on Yadj).

As said this curve can be used for correct chromatic processing in the lower path of our color decoder, but we will elucidate the version where the chromatic processing is optimized in the HLG luma representation (since that makes sense computation- or ease-of-IC-design-wise, since the HLG_SDR image comes in with the pixel colors being represented with such lumas).

So the correct Ladj luminances are converted to corresponding HLG lumas by opto-electronic transformer 510 applying the HLG OETF to them, but then the problem occurs that the resulting various possible lumas are no longer arranged nicely over the span [0-1.0].

Such corresponding HLG lumas for all input Ybb values are shown with curve 712. For this particular TM_PH luminance mapping function shape there is not so much of a problem, because the lumas are only a little bit lower than full range, but there are also TM_PH curves that will yield above 1.0 values. That would be no problems for color processing ICs which have an unlimited representation, e.g. computer software variants which calculate with floating point representations of all values, but in IC oftentimes fixed size representations of the variables are preferred, i.e. overflow above 1.0 must then always be avoided.

If for simplicity of understanding the reader assumes that the TM_PH functionality (in total, together with the perceptual units 402 and 404) is a power law, then the unproblematic, below 1.0 situation will occur for power factors below 1.0, and the problematic overflow situation (i.e. curve 712 yielding relative luminance output values above 1.0 for the highest input luma values) will occur for power values above 1.0. The reader should understand that typically the resultant TM_PH curve will be a function of PB_D (i.e. how deep we have to display adapt from the reconstructed 1000 nit HDR image), and in fact there is a balance struggle between the OOTF behavior of HLG, and our optimization needs.

In any case, a correctly normalized otherwise similarly shaped version 713 of curve 712 will be obtained if the decoder multiplies the Yadj luma by a factor 1/ETA, to obtain the correctly scaled luma Ysc. And the constant ETA is determined from LAM by: ETA=OETF_HLG(LAM). This HLG OETF mapping is applied by opto-electronic mapper 512, and inverter 513 applies the 1/X function to map ETA to 1/ETA.

The resultant Ysc luma values for all input lumas Y (in fact Ybb), can be called the final, correct according to the present invention's principles, PLUT[Y] to be applied as a luminance processing.

The correct chrominance processing (i.e. the path prior to luminance scaling with multiplier 330, namely the determination of F_C by 320 and the chrominance scaling by multiplier 321) can take into account both the LAM-determined luminances, which as described above is Ladj, with split value determined as EOTF_HLG(0.5)=0.08, and the ETA-determined lumas, by counter-correcting for either situation.

The lower chromaticity, or actually embodied as a chrominance processing path, must typically do a suitable saturation processing, with a specific saturation multiplier constant F_C being supplied by saturation multiplier deriver 320 for each luma Ycl which the currently processed pixel in the inputted HLG_SDR image (to be converted to a correctly display adapted MDR image luminance) happens to have.

In fact, there should be a good strategy, which in some embodiments may be determined by what is specified by the creation side, and communicated as at least a part of the F_C[Ycl] function shape, in metadata.

However, for elucidation we will limit ourselves to a pragmatically nicely working embodiment, in which the decoder itself determines the appropriate F_C[Ycl] function on its end.

Before diving into the issue that saturation mapping in the tip of the color gamut of (not just displayable, but also codeable with a RGB additive color representation or a derivation thereof like YCbCr) may be complex, the reader needs to understand the difficulty already even for theoretically easy saturation processing (in the lower part of the color gamut) which the difficult loggamma OETF and the resulting pixel lumas have created for anybody desiring to do color processing directly starting on the HLG_SDR image rather than the according to HLG perfectly reconstructed HDR image (i.e. the processing happens directly in one pass, rather than applying a second pass display adaptation on the 1000 nit receiver-side decoded HDR image).

Legacy YCbCr, as it was derived from NTSC and PAL YUV color gamuts, had a relatively simple colorimetric behaviour, since the Y-axis was defined by a simple function which was approximately a square root power law, but in this new HLG-based YCbCr color definition, there is a bending point which considerably changes the definition not only of the luma, but therefore also the chrominances, and therefore the color behaviour.

The problem of color processing near the gamut tip can be seen by looking to Fig. 7D, in which a pure luminance change of a color (i.e. maintaining the chromaticity being the hue and saturation) corresponds to a vertical shift of the color (indeed, the Lmda value was a relatively brightened version of the original HDR color for a display of lesser PB_D). Relative color brightening for driving a display of lesser PB_D is perfectly doable on the axis of achromatic colors (i.e. colors with a zero saturation s which lie on the luminance L axis) up to reaching the highest point which is the whitest white still possible to code. But for other colors, one can by shifting with some **luminance-only** shifting strategy i.e. luminance mapping function shape easily fall above the upper gamut boundary, i.e. into the unrepresentable colors (what will then typically happen in actuality is the occurrence of some color error, e.g. a clipping luminance reduction and/or a desaturation, and sometimes even a hue shift, e.g. from orange to yellow). E.g. the blue colors on the left of the L-axis risk clipping quite quickly. The same problem can be seen in Fig. 7C, in which chromaticity-preserving luminance-only mapping happens along diagonal lines with a certain angle from the luma (Y)-axis.

But as said, in addition to this already always present major complexity in color mapping, the specific color definition of the HLG_SDR-generated images introduces a further problem.

Suppose we had an infinite cylinder in Fig. 7D (i.e. an infinite rectangular cross-section), then one can brighten all colors as much as one wants. The outer circular boundary represents the largest possible saturation of the colors, so we are not talking about that, although conversion between RGB color representations defined with different primaries can also introduce that further complexity, but that is not needed for understanding the present principles: the dynamic range adapting processing is supposed to only (or when impossible: mostly) change the luminances of the colors, i.e. within the gamut cylinder in the vertical direction. Then there will be no problem with upper gamut boundary overflow, and not need to de-saturate colors with an appropriate F_C[Ycl] multiplier, to create a color in the tip of the gamut which is at least still a little brighter, though at the price of being desaturated.

Even in this ideal situation there is still a complexity with the mathematics inside the gamut, because the lower lumas (or corresponding luminances) are in SDR-HLG images defined according to a gamma function, and the upper lumas with a logarithmic allocation.

In the chrominance representation, the optimal value for the F_C[Ycl] multipliers is:

$$F\_C[Ycl]= 1/Ycl \qquad [\textbf{\underline{Eq. 7}}]$$

But this is only for Ycl values **below 0.5** (note that the input luma split value, which is fed to the chromatic processing path is always 0.5, it is the luminance part, i.e. for the multiplier 330 that the LAM- or ETA-luminance mapping explained above must correctly determine (because that is what the processing otherwise would do: a misalignment between the Cb and Cr values per se, and their corresponding Y value, which as said must conform, otherwise the incorrect final color RGB or {L,hue, saturation} results at the output (typically perhaps a reasonable luminance, but the wrong saturation)).

For values above 0.5 one needs another partial definition of the saturation multipliers defining function. Theoretically one would expect a constant value (typically 1.0), because if logarithmic values are scaled by some factor, the differences cancel.

$$E.g.: Cb^*=\log(Y^*)-\log(B^*)$$

$$Y^*=k * Y \text{ and } B^*= k * B$$

$$Then \ Cb^* = \log(k)+\log(Y)-\log(k)-\log(B)= Cb$$

Ergo, the Cb* corresponding to an (incorrectly) brighter luma would still be correct as it would be the same as for the correct luma.

So in any case, one would need two different kinds of saturation processing strategies on either side of Ycl=0.5.

However, taking also into account the complexities of desaturation near the gamut tip, and the behavior of HLG_SDR colors of brighter pixels, the inventor found a good working F_C[Ycl] determination for Ycl>0.5 to be:

$$F\_C[Ycl]=(1/(ETA*PLUT[Y]) )* power(max\{1, Ycl/ (ETA*PLUT[Y])\} ;1.4)$$

$$[\textbf{\underline{Eq. 8}}]$$

Or in the other notation of Fig. 5 this is equal to:

$$F\_C[Y]=(1/(ETA*Ysc))*(power(max(1, Y/(ETA*Ysc); 1.4)) \ [\textbf{\underline{Eq. 8-bis}}].$$

The first part before the multiplication makes sense, because a huge deviation of the PLUT[Y] can be accounted for in the chromatic path (note that this resultant value can be calculated for all possible input lumas Y, once the TM_PH has been received, so the upper chrominance processing strategy can be calculated e.g. typically a little before the actual pixel colors of the current image to which the particular TM_PH function corresponds need to be calculated). The second part can perform an improvement correction for desaturation in the gamut tip. It will act when Ycl< ETA*PLUT[Y], ergo, when the output lumas of the luminance processing path are boosted, and in particular if they are strongly boosted, the power law can make a significant correction. The first part of the chrominance processing strategy above the half-point takes care of the luminance-independence for logarithmically defined YCbCr colors (as Fig. 3 shows the colors are at the end multiplied by a luminance-mapping-strategy-dependent LH value), and the second power-term of the multiplication works very well for bright yellow colors in images. Other dual chrominance processing strategies for below and above a split luma falling under the essence of this invention and its various embodiments can be used also.

So saturation multiplier deriver 320 determines with the two partial strategies (which may be realized as a single sewn-together function, e.g. as a color-LUT) which multiplication factor is used by multiplier 321 to scale the input Cb and Cr values of the HLG_SDR image pixel, to obtain correctly saturated output Cb* and Cr* values (which then only need to be properly scaled by multiplier to get the final HDR or MDR, or better SDR, pixel color).

A matrixer 322 calculates dimensionless normalized R/LH, G/LH and B/LH values (following the classical matrixing between YnnCb*Cr* and RGB, with e.g. Ynn given a value 1). And as said, Ysc (a.k.a. PLUT[Y]) will be the correct LH luma value (or luminance value in the LAM-only scenario) to obtain the appropriate RH,GH and BH output pixel color values (these may be typically be normalized, or one could also incorporate the scaling to nits with the appropriate PB_C value, but that will typically happen by the display conformance unit 340, which will yield the ultimate output color, e.g. RoGoBo to drive the connected display, as per the agreed color driving protocol (e.g. legacy SDR displays will be driven differently than new HDR displays over e.g. a HDMI connection).

After multiplier 330, all MDR (respectively HDR or improved SDR in such alternative setting) luminances will have been calculated correctly in a normalized i.e. relative representation, and the chromatic components were correctly associated with those luminances, so that the hue and more importantly saturation of the color is also reasonably correct. So this is where the correct tracking of the luminance and chrominance processing happened, ergo where the HLG_SDR colors have been correctly reprocessed, to yield colors for e.g. a 500 nit PB_D display. However, these normalized colors (RH,GH,BH) are not yet the correctly finally scaled colors, for display (not yet in nit e.g.).

To enable that, a display conformance unit 340 will create the final MDR output color, and the manner in which it does so may depend on what display is connected to be supplied with the optimized re-graded output images.

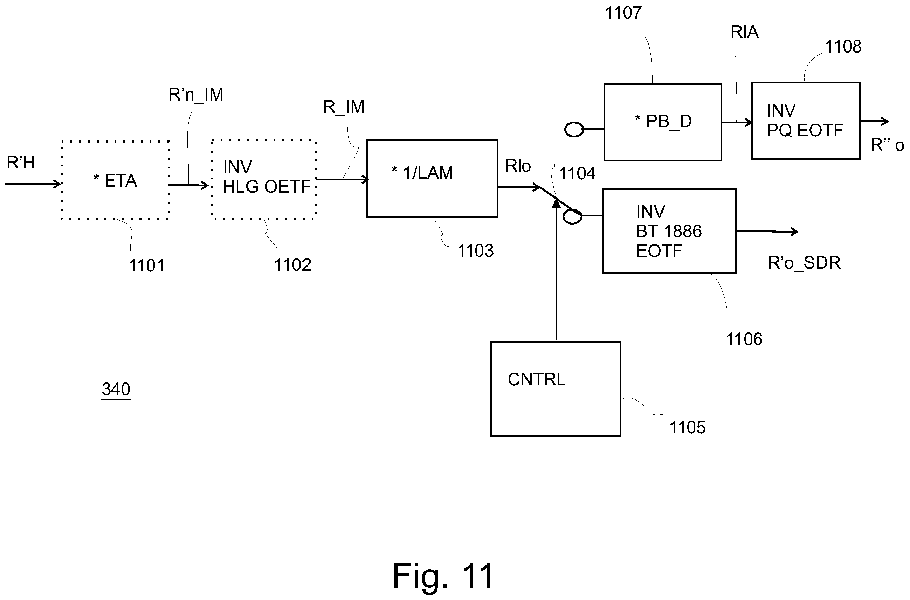

Fig. 11 shows an example of such a display conformance unit 340, which will create the final color representation for driving e.g. one of two kinds of display: either a SDR legacy display, or a HDR display (of any PB_D) which expects to get its input signal formatted as PQ non-linear R"G"B" color components.

The input of this unit 340 are the three color components resulting as output of multiplier 330, and as an example the non-linear R'H component is shown as input (which is represented as an SDR non-linear red component, more precisely a HLG-SDR red component).

In an ETA-based embodiment, first the ETA-scaling is corrected again, by multiplier 1101 which multiplies by the ETA constant which was previously determined for this current image's TM_PH and used in the luminance processing path for the conformization with the chrominances in multiplier 330. This yields the re-scaled intermediate red non-linear color component R'n_IM. Inverse opto-electronic transformer 1102 applies the inverse HLG OETF to this intermediate color component R'n_IM to obtain intermediate linear red component R_IM. Subsequently, what is important in any case, also the LAM-only embodiments (in which case components 1101 and 1102 are not present and R_IM is the linear red HDR component RH as output of multiplier 330), is that multiplier 1103 scales the intermediate linear red color component R_IM again with the LAM value, but now inverse, so it calculates:

$$Rlo=R\_IM/LAM \qquad [\textbf{Eq. 9}]$$

The colors are now in the linear domain, so any magnitude error that was made in the previous path, in particular in the luminance path, to conformize the luminance and chrominance processing, is here counteracted again (e.g. outlier values are renormalized to the range which need not be clipped). In the linear parts of the processing this operation can be done. Note again that R'n_IM and R_IM should not be clipped to 1.0.

Subsequently what happens to the color components depends on the embodiment of the display conformance unit 340. E.g., there may be a video signal switch 1104 routing the 3 color components of the current pixel to any further processing circuitry or algorithm, which switch will typically be under control of a control unit 1105. This unit will e.g. investigate which display is connected, ergo which kind of color communication protocol the display desires for receiving its pixel colors, and which display peak brightness PB_D it has. E.g., if a legacy SDR display is connected (of 100, or maybe 150 nit PB_D), which desires it's colors communicated according to Rec. 709, or in the example the reference SDR display EOTF which was recently standardized as BT 1886, the remaining color formatting will be conversion circuit 1106, which converts the input linear color components, like the red one Rlo, by applying the inverse of the BT.1886 EOTF to obtain as output the correctly converted SDR non-linear color component R'o_SDR:

$$R'o\_SDR=inverse\_EOTF\_BT1886(Rlo) \qquad [\textbf{Eq. 10}].$$

Alternatively, if control unit 1105 finds that a HDR display is attached, it continues the processing by setting the video switch 1104 to the upper processing path. In this path first a multiplier 1107 multiplies the normalized to 1.0 (MDR optimized for this display) red color component Rlo by PB_D, to obtain the component R1A in nits. E.g., a maximum red color component typically has approximately 30% of the nit amount of white (the exact value depending on the chromaticity of the red primary of the connected display), e.g. for a 500 nit PB_D display this will be 150 nit (red color component in nit).

Finally PQ converter 1108 knows how to format these components into PQ-based non-linear red component R"o, which the display expects. The PQ standard can code colors up to a white of 10,000 nit, so this R"o will be a value smaller than 1.0, or more precisely: smaller than 1023 in a 10 bit representation. The same happens to the green and blue pixel color component, and to all other pixel colors of the presently re-graded image, so that the display gets the correctly re-graded MDR image (or HDR or SDR image, whichever the case may be).

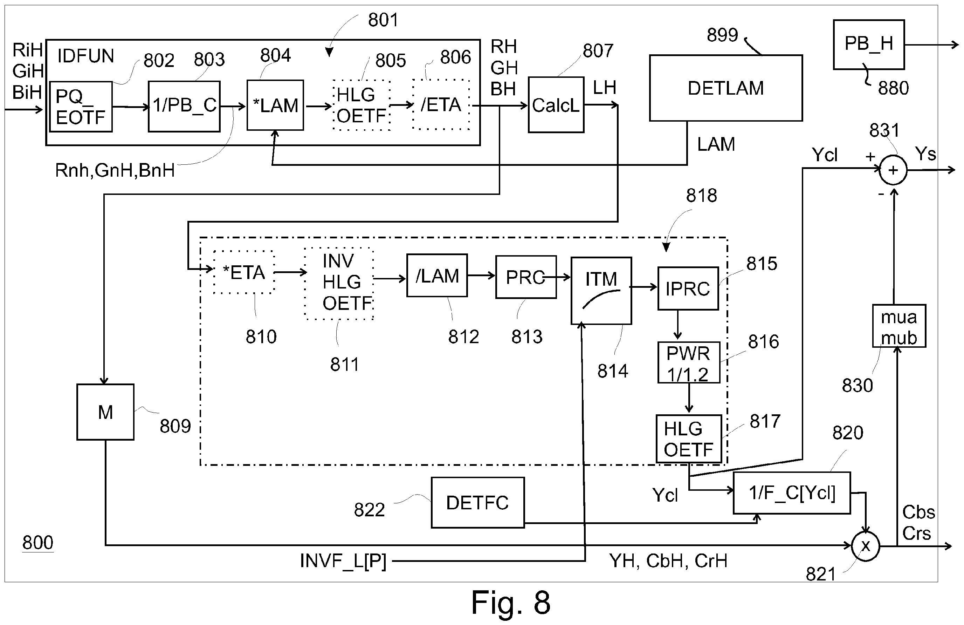

For this new HDR video color processor and corresponding HDR video image decoder, the inventor has designed a corresponding color processor for a video encoder, as explained with Fig. 8.

The goal there is to get corresponding HLG-like colors for images that can function as HLG-type images (i.e. they will look reasonable on a SDR display following, and potentially also on 1000 nit PB_D displays that follow the HLG decoding method), and specifically, also an encoder which standardizes the manner in which colors with luminances above 1000 nit (or the corresponding chromatic colors, which like the 30% primary red color example above lie above 300 nit) are encoded, where the HLG method leaves that kind of uncertain (worse in fact: with the HLG method one cannot even know whether there was an original "first master" HDR scene image with luminances above 1000 nit, or whether the scene only had the luminances as present in the 1000 nit HDR reconstruction of the HLG-SDR image).

Firstly, this method can be done relatively pragmatically easy, because our method of separating the luminance processing path can re-define the re-grading to multiple different levels, by a final re-grading luminance mapping function.

Suppose the original PB_C of the master HDR image was 2000 nit. A 750 nit display-adapted image for a 750 nit PB_D display from the received HLG_SDR image can conceptually be formed by first decoding to a 2000 nit HDR image, and then applying a display adaptation function to that resultant intermediate image, to obtain the 750 nit PB_C MDR image. Since this is just an action happening for each input luminance or typically luma Ybb to obtain the correct output luminance L_750, a total (concatenated) function can be derived, and loaded as new TM_PH in the above explained process.

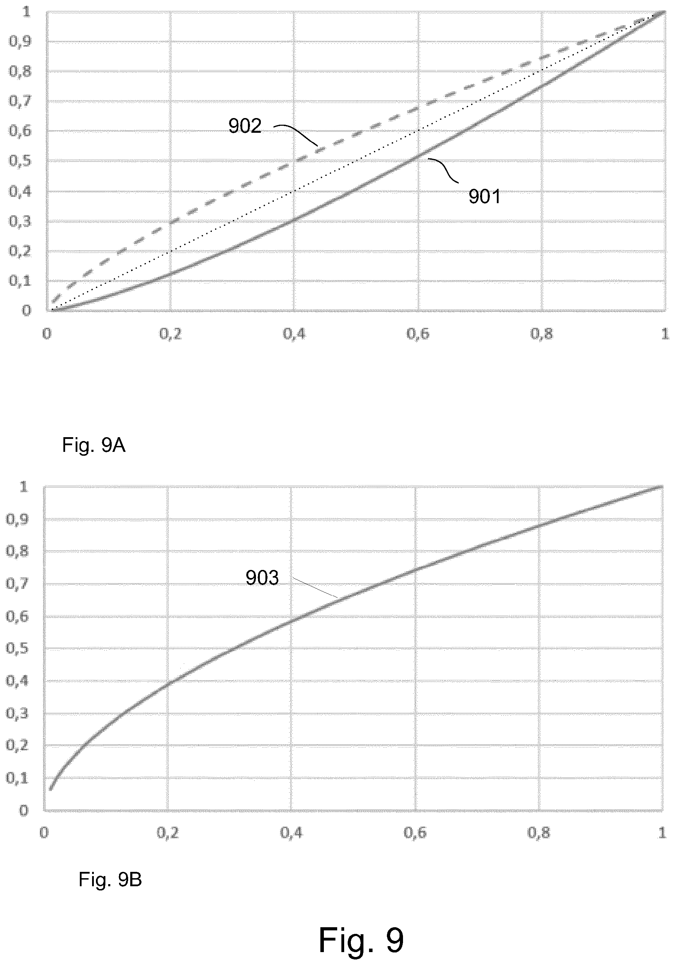

This is illustrated with Fig. 9. Since we can define any re-grading to the received 1000 nit HLG-encoded HDR image, curve 901 shows how such an image is to be up-graded to a 2000 nit image (e.g. a power function with a small power can be used, which darkens the darker colors relatively, so that absolutely they look the same on the brighter display, and the brightest colors are boosted somewhat, to make them shine more spectacularly on the brighter 2000 nit PB_D displays). Note that this optimal function according to applicant's coding method does not have to be an ad hoc function in the receiver, but can be optimally decided at the creation side, and communicated in SEI or similar metadata. In fact, this corresponds to display adaptation between 1000 nit and 2000 nit (which would make sense to be the same as between 2000 nit and 1000 nit). On the other hand, from defining the re-grading to 100 nit (starting from the 2000 nit master, at the encoding side), our display adaptation algorithm (e.g. an embodiment as detailed in WO2017108906, or the specific manner of SL_HDR2 as in the ETSI standard ESTI TS 103 443-2 (JAN 2018)) can define the luminance mapping function for determining the luminances of the 750 nit MDR image starting from the decoded 2000 nit HDR reconstruction luminances. This would give e.g. the function 903 shown in Fig. 9B. The concatenated function to be applied is then:

HLG_HDR reconstructed 1000 nit colors as input

[1] Convert to perceptual Pbb with RHO for 1000 nit -> [2] Luminance map perceptual lumas from 1000 nit to PB_C=2000 nit -> [3] Re-convert to luminances, with the RHO value for 2000 nit -> [4] Convert to perceptual Pbb's for step 2 (i.e. starting from the 2000 nit HDR reconstruction, i.e. with the RHO for 2000 nit, to do the display adaptation for PB_D=750 nit) -> [5] do the display adaptation 2000-to-750 -> [6] Convert the resultant MDR perceptual lumas back to luminances.

Steps [3] and [4] are inverse functions, so they cancel, i.e. the subsequent luminance mapping can happen in the perceptual luma domain.

Mapping steps [2] and [5] create a concatenated, final function to use, which is function 902. This function directly maps from the 1000 nit reconstructed perceptual lumas to the display optimized luminances, without having to do two steps with the intermediate 2000 nit reconstruction. Steps [1] and [6] are the normal perceptualization steps which applicant invented previously and which were explained with Fig. 3.

The reader should also understand that both function 903 and function 901 can be calculated from a basic function which describes, as defined by the content creation side, how the luminances should re-grade when going between a reference HDR image, and the 100 nit SDR image. In fact, that reference HDR image can be chosen to be the 2000 nit master HDR image. Function 901 will then be the inverse of how the creation side's encoder would determine a 1000 nit display adapted image from the 2000 nit master image. Function 903 is as said how the display adaptation image would create a 750 nit image (or whatever PB_C=PB_D image that is needed at the receiving side, only determinable at the receiving side, but from the core guidance of how the spectrum of all MDR images in between 2000 and 100 nit should be re-graded). Concatenation of two mappings is easily understood by the reader F_fin(Lrbb)= F2(F1(Lrbb)), with Lrbb being any possible luminance on the 0-1000 nit range, i.e. of the HLG reconstructed HDR image (which happens in units 4010 and 401). An equivalent embodiment can define the luminance mapping between 1000 nit and 100 nit, and use display adaptation to derive therefrom the 1000->2000 decoding part of the final function, etc.

This shape of this function 902 reflects that the lumas in a HLG-SDR image of an original e.g. 1500 nit PB_D HDR master image will be slightly different than when the original was 1000 nit (and similarly for the 1000 nit HDR reconstruction). Since the content creator can with our arbitrarily customizable luminance mapping functions choose such a function that keeps the darks essentially unchanged compared to the 1000 nit master situation as it would be (or at least nicely visible), all scenarios will give reasonable HLG-SDR images (and at least more reasonable than not being able to do an encoding of a 1500 nit master according to HLG at all).

Now this encoding works if the encoder does the inverse processing of what the decoder will do, i.e. in particular using the same LAM, and where appropriate ETA value(s).

Fig. 8 shows the novel encoder's image color transformer 800, which gets as input the linear 2000-nit PB_C red, green and blue color components RiH, GiH, and BiH (we assumed they were defined as lumas according to the PQ OETF). Inverse display conformance unit 801 comprises an electro-optical transformer 802 and a multiplier 803 to create linear normalized versions RnH, GnH, BnH of the input color. Multiplier 804 multiplies these with the constant LAM, which is calculated as explained with Fig. 4 (the normalized luminance of the 1000 nit HDR should still be 0.08). This is done by LAM calculation unit 899 (which can also calculate and output ETA if needed for the embodiment). Subsequently opto-electronic transformer 805 and multiplier 806 create the correctly scaled HDR non-linear (respectively linear if the dotted components are not present) color components RH,GH and BH, from which luma calculator 807 calculates the corresponding luma (according to the standard colorimetric equation for the primary color chromaticities of the color representation, e.g. Rec. 2020). This luma LH is input to the luminance mapping unit 818. The multiplier 810 multiplies LH by ETA, transformer 811 applies the inverse of the HLG OETF, multiplier 812 mutliplies by 1/LAM, perceptual convertor 813 converts to perceptual lumas as described above, luminance mapper 814 applies the luminance mapping to the output image dynamic range (being loaded with function INVF_L[P] which maps lumas from the 2000 nit grading to the 100 nit grading), inverse perceptual convertor 815 re-converts to luminances, power function 816 does the OOTF inverse operation by using a power value 1/1.2, and finally opto-electronic convertor 817 applies the HLG OETF to obtain HLG-SDR luma Ycl. The inverse color processing of the decoder of Fig. 5 happens by matrixer 809 which calculates Cb, Cr components from the RH, GH, BH color components, saturation strategy determiner 822 which determines the saturation strategy (which to be inverse to the decoder behaviour, should follow the strategy of above eqs. 7 and 8, the inverse being done as a division in unit 820), and saturation multiplier determiner 820, which determines the appropriate F_C value for each pixel's Ycl value, and finally multiplier 821, which multiplies CbH, CrH by F_C.

The output of multiplier 821 is the correct HLG_SDR Cb and Cr value: Cbs and Crs. The scaled luminance is derived from Ycl by adder 831, which does the mua*Cbs+mub*Crs subtraction, to yield final glowing-corrected luma Ys (or an embodiment not doing this can just use mua=mub=0). Note that if mua and mub are computed according to the same equations in encoder and decoder, those values need not be communicated.

The new encoder must also have a peak brightness output unit 880 to output the peak brightness of the original master HDR image peak brightness PB_H, because in contrast to a HLG-SDR image which always represents 1000 nit HDR master HDR images, the new decoder now has to know whether it needs to determine its PB_C-to-PB_D mapping (the above concatenated mapping) starting from e.g. a 1500 or a 2000 nit original (the bendedness of the mapping of course depending on from how high the e.g. 750 nit image is to be calculated; i.e. similarly the decoder uses this PB_H value to determine the final to be used TM_PH function).

The LAM value is calculated for one specific situation. The requirement that the decoder is able to reconstruct the original master HDR image, means that, when the decoder gets HLG-SDR (i.e. which would normally be reconstructed by the Fig. 5 decoder to 1000 nit PB_C images, and then to PB_D MDR images, now the reconstruction must be perfect in case a PB_D=2000 nit (if the creation-side input master HDR image was e.g. 2000 nit; or in general, the communicated PB_H value) display is connected. So the LAM and ETA value (and if applicable mua and mub) are calculated for that situation, at the encoding side. The encoder of Fig. 8 can also be used in a configuration where it maps (according to the same consecutive set of processings with the LAM and typically ETA part) between the input image's PB_C, e.g. 2000 nit, and 1000 nit (i.e. the typical PB_H level for HLG content), and thereafter a classical HLG conversion applying its OETF on the three channels separate is performed, to generate the HLG_SDR YCbCr pixel color values. In this manner it functions as a pre-processor.

Note that where we teach function for simplicity of understanding, also in some embodiments a set of functions for an image (time instant) can be communicated, which are to be applied concatenatedly, but that doesn't majorly change the essence of our new technology.

The algorithmic components disclosed in this text may (entirely or in part) be realized in practice as hardware (e.g. parts of an application specific IC) or as software running on a special digital signal processor, or a generic processor, etc.

It should be understandable to the skilled person from our presentation which components may be optional improvements and can be realized in combination with other components, and how (optional) steps of methods correspond to respective means of apparatuses, and vice versa. The word "apparatus" in this application is used in its broadest sense, namely a group of means allowing the realization of a particular objective, and can hence e.g. be (a small circuit part of) an IC, or a dedicated appliance (such as an appliance with a display), or part of a networked system, etc. "Arrangement" is also intended to be used in the broadest sense, so it may comprise inter alia a single apparatus, a part of an apparatus, a collection of (parts of) cooperating apparatuses, etc.

The computer program product denotation should be understood to encompass any physical realization of a collection of commands enabling a generic or special purpose processor, after a series of loading steps (which may include intermediate conversion steps, such as translation to an intermediate language, and a final processor language) to enter the commands into the processor, and to execute any of the characteristic functions of an invention. In particular, the computer program product may be realized as data on a carrier such as e.g. a disk or tape, data present in a memory, data travelling via a network connection -wired or wireless- , or program code on paper. Apart from program code, characteristic data required for the program may also be embodied as a computer program product.

Some of the steps required for the operation of the method may be already present in the functionality of the processor instead of described in the computer program product, such as data input and output steps.

It should be noted that the above-mentioned embodiments illustrate rather than limit the invention. Where the skilled person can easily realize a mapping of the presented examples to other regions of the claims, we have for conciseness not mentioned all these options in-depth. Apart from combinations of elements of the invention as combined in the claims, other combinations of the elements are possible. Any combination of elements can be realized in a single dedicated element.

Any reference sign between parentheses in the claim is not intended for limiting the claim. The word "comprising" does not exclude the presence of elements or aspects not listed in a claim. The word "a" or "an" preceding an element does not exclude the presence of a plurality of such elements.

**Claims**

1. An image color transformer (208) comprising a luminance mapping unit (302) and a chrominance mapping unit (321), arranged to get as input an YCbCr-defined pixel color of an input image (Im_RLDR) in which the luma component (Y) is defined by an opto-electrical transfer function which allocates lumas for a lower part of a range of pixel luminances (DR_h) according to a square root function, and lumas for an upper part of the pixel luminances according to a logarithmic function, and arranged to calculate an output color (RH,GH,BH) of an output image (Im3000n) having a dynamic range which is different from the dynamic range of the input image, wherein the image color transformer is arranged to receive a luminance mapping function (F_L[P]) to be applied to the pixel luma yielding a resultant luminance (Lmda), and a chrominance mapping function (F_C[Y]) to be applied to the pixel chrominances yielding output chrominances (Cb*, Cr*),

   - **characterized in that** the color transformer comprises a scale factor determiner (400) arranged to determine a scale factor (LAM) which is calculated so that for any received luminance mapping function shape the value of the resultant luminance (Lmda) which is obtained by luminance mapping an input pixel luma having a value equal to 0.5, is after multiplying said value of the resultant luminance by the scale factor identical to the luminance which results from applying the inverse of the opto-electrical transfer function to an input pixel luma having a value equal to 0.5;
   - and which color transformer is arranged to determine an adjusted luminance (Ladj) by multiplying the resultant luminance (Lmda), which is obtained by luminance mapping any input pixel luma, by the scale factor (LAM), and arranged to use the adjusted luminance and the output chrominances to determine the output color (RH,GH,BH).

2. An image color transformer (208) as claimed in claim 1, further comprising a second scale factor determiner (512) arranged to determine a second scale factor (ETA) which is determined by applying the opto-electronic transfer function to the scale factor (LAM), and arranged to scale the adjusted luminance (Ladj) to obtain a scaled luma (Ysc), which the color transformer uses together with the output chrominances (Cb*, Cr*) to obtain the output color (RH,GH,BH).

3.  An image color transformer (208) as claimed in claim 1 or 2, arranged to determine the chrominance mapping function upper part for lumas above 0.5 based on the adjusted luminance (Ladj).

4.  An image color transformer (208) as claimed in claim 2, arranged to determine the chrominance mapping function upper part for lumas above 0.5 based on the second scale factor (ETA).

5.  An image color transformer (208) as claimed in claim 1 in which the chrominance mapping function upper part for lumas above 0.5 is determined as F_C[Y]=(1/(ETA*Ladj))*(power(max(1, Y/(ETA*Ladj); 1.4)).

6.  An image color transformer (208) as claimed in claim 2 in which the chrominance mapping function upper part for lumas above 0.5 is determined as F_C[Y]=(1/(ETA*Ysc))*(power(max(1, Y/(ETA*Ysc); 1.4)).

7.  An image color transformer (208) as claimed in any of the above claims in which the luma Y to be used in the luminance mapping and the chrominance mapping is a corrected luma (Ycl) which is calculated from the luma (Y) of the input image pixel being processed, by a in the color transformer comprised correction factor deriver (310) which calculates the corrected luma according to Ycl=min(1; Y+max(0;mua*Cb+muab*Cr)), in which mua and mub are constants calculated by the correction factor deriver depending on the peak brightness of the output image to be calculated.

8.  An image color transformer (208) as claimed in claim 7, in which the mua and mub constants are calculated depending on the second scale factor (ETA) according to the equations: F=(max(ETA;1)-1)/0.09057; mub=min(F*0.146;0.21); mua=mub/2.

9.  An image color transformer (800) comprising a luminance mapping unit (818) and a chrominance mapping unit (821), arranged to get as input a pixel color (RiH,GiH,BiH) of a high dynamic range input image (MAST_HDR), and arranged to calculate an output color (Ys,Cbs,Crs) of an output image (SDR_HLG) having a second luminance dynamic range (DR_s) which is different from a first luminance dynamic range (DR_h) being the luminance dynamic range of the input image, which output color has a luma component (Ys) which is to be decoded into a luminance by an inverse of an opto-electrical transfer function which allocates lumas for a lower part of the first dynamic range (DR_h) according to a square root function, and lumas for an upper part of the pixel luminances of said dynamic range according to a logarithmic function;

    - wherein the image color transformer is arranged to receive a luminance mapping function (INVF_L[P]) to be applied to the luminance of the pixel color yielding a resultant luma (Ycl), and a chrominance mapping function (1/F_C[Y]) to be applied to the chrominances (CbH, CrH) of the pixel color yielding output chrominances (Cbs, Crs);
    - wherein the image color transformer has a peak brightness output unit (880) arranged to output a peak brightness (PB_H) of the high dynamic range input image (MAST_HDR);
    - **characterized in that** the color transformer comprises a scale factor determiner (899) arranged to determine a scale factor (LAM) which is calculated so that for any received luminance mapping function shape (INVF_L[P]), the value of an adjusted luminance (Ladj) which is obtained by multiplying by said scale factor a resultant luminance (Lmda), which is defined on a luminance range of which the maximum corresponds to the peak brightness (PB_H) and which is obtained by luminance mapping an input pixel luma having a value equal to 0.5 by applying the inverse of the received luminance mapping function shape, is equal to the luminance which results from applying the inverse of the opto-electrical transfer function to an input pixel luma having a value equal to 0.5;

    and which color transformer is arranged to multiply with the inverse of said scale factor the luminance of pixel color (RiH,GiH,BiH), to obtain a luma (Ycl) for use in the determination of a multiplication value (FC_[Ycl]) to be used by a multiplier (821) in a multiplication by the two chrominances (CbH, CrH).

10. A method of image color transformation comprising arranged to get as input an YCbCr-defined pixel color of an input image (Im_RLDR) in which the luma component (Y) is defined by an opto-electrical transfer function which allocates lumas for a lower part of a range of pixel luminances (DR_h) according to a square root function, and lumas for an upper part of the pixel luminances according to a logarithmic function, and arranged to calculate an output color (RH,GH,BH) of an output image (Im3000n) having a dynamic range which is different from the dynamic range of the input image, wherein the method is arranged to receive a luminance mapping function (F_L[P]) to be applied to the pixel luma yielding a resultant luminance (Lmda), and a chrominance mapping function (F_C[Y]) to be applied to the pixel chrominances yielding output chrominances (Cb*, Cr*),

- **characterized in that** the method is arranged to determine a scale factor (LAM) which is calculated so that for any received luminance mapping function shape the value of the resultant luminance (Lmda) which is obtained by luminance mapping an input pixel luma having a value equal to 0.5, is after multiplying said value of the resultant luminance by the scale factor identical to the luminance which results from applying the inverse of the opto-electrical transfer function to an input pixel luma having a value equal to 0.5;

and which method is arranged to determine an adjusted luminance (Ladj) by multiplying the resultant luminance (Lmda), which is obtained by luminance mapping any input pixel luma, by the scale factor (LAM), and arranged to use the adjusted luminance and the output chrominances to determine the output color (RH,GH,BH).

11. A method of image color transformation arranged to get as input a pixel color (RiH,GiH,BiH) of a high dynamic range input image (MAST_HDR), and arranged to calculate an output color (Ys,Cbs,Crs) of an output image (SDR_HLG) having a second luminance dynamic range (DR_s) which is different from a first luminance dynamic range (DR_h) being the luminance dynamic range of the input image, which output color has a luma component (Ys) which is to be decoded into a luminance by an inverse of an opto-electrical transfer function which allocates lumas for a lower part of the first dynamic range (DR_h) according to a square root function, and lumas for an upper part of the pixel luminances of said dynamic range according to a logarithmic function;

- wherein the method is arranged to receive a luminance mapping function (INVF_L[P]) to be applied to the luminance of the pixel color yielding a resultant luma (Ycl), and a chrominance mapping function (1/F_C[Y]) to be applied to the chrominances (CbH, CrH) of the pixel color yielding output chrominances (Cbs, Crs);
- wherein the method is arranged to output a peak brightness (PB_H) of the high dynamic range input image (MAST_HDR);
- **characterized in that** the method is arranged to determine a scale factor (LAM) which is calculated so that for any received luminance mapping function shape (INVF_L[P]), the value of an adjusted luminance (Ladj) which is obtained by multiplying by said scale factor a resultant luminance (Lmda), which is defined on a luminance range of which the maximum corresponds to the peak brightness (PB_H) and which is obtained by luminance mapping an input pixel luma having a value equal to 0.5 by applying the inverse of the received luminance mapping function shape, is equal to the luminance which results from applying the inverse of the opto-electrical transfer function to an input pixel luma having a value equal to 0.5;

and which method is arranged to multiply with the inverse of said scale factor the luminance of pixel color (RiH,GiH,BiH), to obtain a luma (Ycl) for use in the determination of a multiplication value (FC_[Ycl]) to be used by a multiplier (821) in a multiplication by the two chrominances (CbH, CrH).

Fig. 1

Fig. 2

Fig. 3

EP 3 537 697 A1

Fig. 4

Fig. 5

Fig. 6

EP 3 537 697 A1

Fig. 7A

Fig. 7B

Fig. 7C

Fig. 7D

FIG. 7

Fig. 8

EP 3 537 697 A1

Fig. 9A

Fig. 9B

Fig. 9

Fig. 10

Fig. 11

EP 3 537 697 A1

Europäisches
Patentamt

European
Patent Office

Office européen
des brevets

# EUROPEAN SEARCH REPORT

Application Number

EP 18 16 0346

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/129793 A1 (KONINKLIJKE PHILIPS NV [NL]) 3 August 2017 (2017-08-03) * page 19, line 20 - page 25, line 5; figures 4,5 * ----- | 1-11 | INV. H04N1/00 H04N1/56 G09G5/02 |
| A | Whp 283 ET AL: "Research & Development White Paper Non-linear Opto-Electrical Transfer Functions for High Dynamic Range Television", , 30 July 2014 (2014-07-30), XP055373120, Retrieved from the Internet: URL:http://downloads.bbc.co.uk/rd/pubs/whp/whp-pdf-files/WHP283.pdf [retrieved on 2017-05-16] * page 6 - page 16 * ----- | 1 | |

TECHNICAL FIELDS
SEARCHED (IPC)

H04N
G09G

The present search report has been drawn up for all claims

| Place of search | Date of completion of the search | Examiner |
|---|---|---|
| Munich | 7 September 2018 | Demin, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 18 16 0346

This annex lists the patent family members relating to the patent documents cited in the above-mentioned European search report.
The members are as contained in the European Patent Office EDP file on
The European Patent Office is in no way liable for these particulars which are merely given for the purpose of information.

07-09-2018

| Patent document cited in search report | Publication date | Patent family member(s) | Publication date |
|---|---|---|---|
| WO 2017129793 A1 | 03-08-2017 | NONE | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017108906 A

**Non-patent literature cited in the description**

- *ETSI TS 103 433-1,* August 2017
- *ESTI TS 103 443-2,* January 2018